# EUROPEAN PATENT SPECIFICATION

(11) **EP 4 095 460 B1**
(45) Date of publication and mention of the grant of the patent: **26.11.2025**
(21) Application number: 21767684.0
(22) Date of filing: 09.03.2021
(51) Int. Cl.: F25B 21/00

(54) **COOLING MODULE USING SOLID REFRIGERANT AND COOLING SYSTEM USING SOLID REFRIGERANT**
KÜHLMODUL MIT EINEM FESTEN KÄLTEMITTEL UND KÜHLSYSTEM MIT EINEM FESTEN KÄLTEMITTEL
MODULE DE REFROIDISSEMENT UTILISANT UN FLUIDE FRIGORIGÈNE SOLIDE ET SYSTÈME DE REFROIDISSEMENT UTILISANT UN FLUIDE FRIGORIGÈNE SOLIDE

(30) Priority: 13.03.2020 JP 2020043796
(43) Date of publication of application: 30.11.2022
(73) Proprietor: Daikin Industries, Ltd., Osaka-shi, Osaka 530-0001 (JP)
(72) Inventor: TERAKI, Junichi, Osaka-shi, Osaka 530-8323 (JP)
(74) Representative: Hoffmann Eitle
(86) International application number: PCT/JP2021/009174
(87) International publication number: WO 2021/182441

(56) References cited:
- CN-A- 110 375 459
- CN-A- 110 715 470
- JP-A- 2014 518 371
- JP-A- 2015 078 790
- JP-A- 2017 501 364
- JP-A- 2020 026 949
- JP-A- 2020 041 791
- US-A1- 2012 291 453
- US-A1- 2015 168 030

## Description

### TECHNICAL FIELD

The present invention relates to a cooling module with a solid-state refrigerant and a cooling system with a solid-state refrigerant.

### BACKGROUND ART

A magnetic refrigeration module for creating a cold thermal energy and a warm thermal energy by utilizing a magnetocaloric effect has been known (for example, JP 2016-530479 A). The magnetic refrigeration module of JP 2016-530479 Ais configured to apply and remove a magnetic field to and from a housing portion that houses a magnetic working substance therein, and to cause a heating medium to flow into and out of the housing portion, thereby generating a cold thermal energy and a warm thermal energy.

US 2015/0168030 A1 represents the closest prior art and discloses a magnetic refrigeration system that provides flow-balanced channels between fluid control valves and the magnetocaloric beds to eliminate inefficiencies caused by unequal utilization of the magnetic beds from flow variations.

### SUMMARY OF THE INVENTION

### TECHNICAL PROBLEM

In order to maximize the performance of the magnetic refrigeration module, it is ideal to maximize the utilization of the magnetic working substance inside the housing portion. For this purpose, the heating medium needs to flow into a wide range of the housing portion. In order to let the heating medium to flow into a wide range of the housing portion, it is necessary to have a space between the housing portion and a flow path from which the heating medium flows in, so that the space allows the flow of the heating medium to spread over. The heating medium of an amount equivalent to the capacity of the space will not be discharged out of the magnetic refrigeration module, and therefore the space becomes a dead volume, thereby deteriorating performance of the magnetic refrigeration. Therefore, it is desirable that this space be as small as possible.

However, if this space is small, it becomes difficult to let the heating medium flow into a wide range of the housing portion, and therefore efficient utilization of the magnetic working substance cannot be achieved. This also results in deterioration of the performance of the magnetic refrigeration module after all.

In addition, known magnetic refrigeration modules, which are basically configured in a rectangular shape, would have a more wasted space when applied to a rotating magnet type, thereby resulting in performance deterioration.

An object of the present invention is to improve the performance of the cooling module with a solid-state refrigerant, especially the magnetic refrigeration module, by reducing the dead volume or a wasted space as much as possible.

### SOLUTION TO THE PROBLEM

The present invention is defined by the appended independent claim 1. The dependent claims are directed to optional features and preferred embodiments.

A first aspect of the present disclosure is directed to a cooling module for a solid-state refrigerant cooling, including: an annular storing portion (21) including a housing portion (22) for housing therein a solid-state refrigerant substance (24) and forming therein flow paths (23) through which a heating medium flows; a low-temperature-side inflow path (25) through which the heating medium flows into one ends of the flow paths (23); a high-temperature-side inflow path (27) through which the heating medium flows into the other ends of the flow paths (23); a low-temperature-side outflow path (26) through which the heating medium flowing out of the one ends of the flow paths (23) flows; a high-temperature-side outflow path (28) through which the heating medium flowing out of the other ends of the flow paths (23) flows; a first space (29) between the one ends of the flow paths (23) and the low-temperature-side inflow path (25); and a second space (30) between the other ends of the flow paths (23) and the high-temperature-side inflow path (27), the cooling module further comprising: a first intermediate flow path (31) being in fluid communication with the low-temperature-side inflow path (25) and the first space (29) and being for widening a flow of the heating medium flowing from the low-temperature-side inflow path (25) to the first space (29); and a second intermediate flow path (33) being in fluid communication with the high-temperature-side inflow path (27) and the second space (30) and being for widening a flow of the heating medium flowing from the high-temperature-side inflow path (27) to the second space (30).

The first aspect makes it possible to reduce the dead volume in the first space (29) and the second space (30) by the effect of the first intermediate flow path (31) and the second intermediate flow path (33). Moreover, because the housing portion (22) and the like are positioned in the annular storing portion (21), it is possible to reduce a wasted space even when the first aspect is applied to a module, such as a module of the rotating magnet type, in which a force field generator such as a magnet is the one to rotate. Therefore, this facilitates the improvement in the performance of the cooling module for the solid-state refrigerant cooling.

A second aspect of the present disclosure is directed to the cooling module of the first aspect, wherein the annular storing portion (21) includes a plurality of storing members (21a to 211), and the plurality of storing members (21a to 21l) each includes the housing portion (22), the low-temperature-side inflow path (25), the high-temperature-side inflow path (27), the low-temperature-side outflow path (26), the high-temperature-side outflow path (28), the first space (29), the second space (30), the first intermediate flow path (31), and the second intermediate flow path (33).

The second aspect makes it easier to construct the annular storing portion (21), compared with a case where the annular storing portion (21) is integrally formed.

A third aspect of the present disclosure is directed to the cooling module of the second aspect, wherein the plurality of storing members (21a to 211) has an annular sectoral, sectoral, or trapezoidal shape.

The third aspect makes it easier to construct the annular storing portion (21) from the plurality of storing members (21a to 211).

A fourth aspect of the present disclosure is directed to the cooling module of the second or third aspect, wherein the plurality of storing members (21a to 211) each accommodates therein a plurality of divisional modules (100), and the plurality of storing members (21a to 211) each further includes a header (40) for connecting the plurality of divisional modules (100) with each other in parallel and/or in series.

The fourth aspect facilitates further reduction of the dead volume compared to the configuration without such division, and in a case of the magnetic refrigeration module whose solid-state refrigerant substance is a magnetic working substance, the fourth aspect also facilitates reduction of the loss that would be caused due to eddy currents because a magnetic circuit of each of the storing members (21a to 211) is divided into elongated sections by the divisional modules (100).

A fifth aspect of the present disclosure is directed to the cooling module of any one of the first to fourth aspects, wherein at least either ones of circumferential dimensions or axial dimensions of the first space (29) and the second space (30) are changed from an inner peripheral side toward an outer peripheral side of the annular storing portion (21).

The fifth aspect makes it possible to reduce a wasted space and reduce the dead volume to a minimal required size even when the fifth aspect is applied to a module, such as a module of the rotating magnet type, in which a force field generator such as a magnet is the one to rotate, and therefore the fifth aspect can facilitate the improvement in the performance of the cooling module with the solid-state refrigerant cooling.

A sixth aspect of the present disclosure is directed to the cooling module of any one of the first to fifth aspects, wherein at least either ones of circumferential dimensions or axial dimensions of the first intermediate flow path (31) and the second intermediate flow path (33) are changed from an inner peripheral side toward an outer peripheral side of the annular storing portion (21).

The sixth aspect makes it possible to reduce a wasted space and reduce the intermediate flow paths (which would become dead volumes when the intermediate flow paths are excessively large) to a minimal required size even when the sixth aspect is applied to a module, such as a module of the rotating magnet type, in which a force field generator such as a magnet is the one to rotate, and therefore the sixth aspect can facilitate the improvement in the performance of the cooling module with the solid-state refrigerant cooling.

A seventh aspect of the present disclosure is directed to the cooling module of the sixth aspect, wherein the first intermediate flow path (31) and the second intermediate flow path (33) are slits (31, 33), the slits (31, 33) extending along the flow paths (23), and at least either ones of circumferential dimensions or axial dimensions of the slits (31, 33) are changed from an inner peripheral side toward an outer peripheral side of the annular storing portion (21).

The seventh aspect makes it easier to construct the first intermediate flow path (31) and the second intermediate flow path (33), whose circumferential dimensions or axial dimensions change.

An eighth aspect of the present disclosure is directed to the cooling module of any one of the first to seventh aspects, wherein the annular storing portion (21) is configured to receive application of a force field such as a magnetic field in an axial direction of the annular storing portion (21), and the first space (29) and the second space (30) are positioned to sandwich the flow paths (23) therebetween in the direction of the application of the force field such as the magnetic field applied on the annular storing portion (21).

The eighth aspect causes the flow direction of the heating medium from the first space (29) to the second space (30) via the housing portion (22) and the flow direction of the heating medium in the opposite direction to be substantially parallel to the direction of the force field, such as the magnetic field, applied on the annular storing portion (21).

A ninth aspect of the present disclosure is directed to the cooling module of any one of the first to eighth aspects, wherein a flow direction of the heating medium flowing into the low-temperature-side inflow path (25) and a flow direction of the heating medium flowing out from the low-temperature-side outflow path (26) are in opposite ways to each other, a flow direction of the heating medium flowing into the high-temperature-side inflow path (27) and a flow direction of the heating medium flowing out from the high-temperature-side outflow path (28) are in opposite ways to each other, the flow direction of the heating medium flowing into the low-temperature-side inflow path (25) and the flow direction of the heating medium flowing into the high-temperature-side inflow path (27) are in the same way to each other, and the flow direction of the heating medium flowing out from the low-temperature-side outflow path (26) and the flow direction of the heating medium flowing out from the high-temperature-side outflow path (28) are in the same way to each other.

The ninth aspect makes it possible to configure such that all of the inflow port of the low-temperature-side inflow path (25), the outflow port of the low-temperature-side outflow path (26), the inflow port of the high-temperature-side inflow path (27), and the outflow port of the high-temperature-side outflow path (28) are located on the same side of the magnetic refrigeration module.

A tenth aspect of the present disclosure is directed to the cooling module of any one of the first to ninth aspects, wherein all of an inflow port of the low-temperature-side inflow path (25), an inflow port of the high-temperature-side inflow path (27), an outflow port of the low-temperature-side outflow path (26), and an outflow port of the high-temperature-side outflow path (28) are provided on the outer peripheral side of the annular storing portion (21).

The tenth aspect makes it easier to provide the inflow port of the low-temperature-side inflow path (25), the outflow port of the low-temperature-side outflow path (26), the inflow port of the high-temperature-side inflow path (27), and the outflow port of the high-temperature-side outflow path (28).

An eleventh aspect of the present disclosure is directed to the cooling module of any one of the first to tenth aspects, wherein the low-temperature-side inflow path (25), the high-temperature-side inflow path (27), the low-temperature-side outflow path (26), and the high-temperature-side outflow path (28) are sealed on the inner peripheral side of the annular storing portion (21).

The eleventh aspect makes it possible to provide all of the inflow port of the low-temperature-side inflow path (25), the inflow port of the high-temperature-side inflow path (27), the outflow port of the low-temperature-side outflow path (26), and the outflow port of the high-temperature-side outflow path (28) on the outer peripheral side of the annular storing portion (21).

A twelve aspect of the present disclosure is directed to the cooling module of any one of the first to eleventh aspects, further including: a third intermediate flow path (35) providing fluid communication between the first space (29) and the low-temperature-side outflow path (26); and a fourth intermediate flow path (37) providing fluid communication between the second space (30) and the high-temperature-side outflow path (28).

The twelfth aspect makes it possible to reduce the dead volume in the first space (29) and the second space (30) by the effect of the third intermediate flow path (35) and the fourth intermediate flow path (37).

A thirteenth aspect of the present disclosure is directed to the cooling module of any one of the first to twelfth aspects, wherein the solid-state refrigerant substance (24) is a magnetic working substance (24).

The thirteenth aspect makes it possible to configure a magnetic refrigeration module with excellent performance.

A fourteenth aspect of the present disclosure is directed to a cooling system for a solid-state refrigerant cooling, including: the cooling module of any one of the first to twelfth aspects for the solid-state refrigerant cooling; a force field generator (15a), such as a magnet, for applying a force field such as a magnetic field onto the annular storing portion (21) in an axial direction of the annular storing portion (28); a low-temperature-side heat exchanger (60) provided between the low-temperature-side outflow path (26) and the low-temperature-side inflow path (25); a high-temperature-side heat exchanger (70) provided between the high-temperature-side outflow path (28) and the high-temperature-side inflow path (27); a plurality of the low-temperature-side inflow paths (25), a plurality of the high-temperature-side inflow paths (27), a plurality of the low-temperature-side outflow paths (26), and a plurality of the high-temperature-side outflow path (28); and flow path switching valves (91, 92, 93, 94), provided respectively between the plurality of the low-temperature-side outflow paths (26) and the low-temperature-side heat exchanger (60), between the plurality of the low-temperature-side inflow paths (25) and the low temperature-side heat exchanger (60), between the plurality of the high-temperature-side outflow paths (28) and the high-temperature-side heat exchanger (70), and between the plurality of the high-temperature-side inflow path (27) and the high-temperature-side heat exchanger (70).

The fourteenth aspect makes it possible to provide a cooling system for a solid-state refrigerant cooling, whose refrigerating capacity is high even in a case of employing such a module, such as the module of the rotating magnet type, in which the force field generator, such as a magnet, rotates.

A fifteenth aspect of the present disclosure is directed to the cooling system of the fourteenth aspect, wherein the solid-state refrigerant substance (24) is a magnetic working substance (24).

The fifteenth aspect makes it possible to configure a magnetic refrigeration system with excellent performance.

### BRIEF DESCRIPTION OF THE DRAWINGS

FIG. 1 is a circuit diagram schematically illustrating a configuration of a magnetic refrigeration system according to a first embodiment.
FIG. 2 is a plan view schematically illustrating a configuration of a magnetic refrigeration module according to the first embodiment, which is viewed from an axial direction of an annular storing portion.
FIG. 3 is a cross-sectional view illustrating the magnetic refrigeration module according to the first embodiment, which is viewed from a radial direction of the annular storing portion.
FIG. 4 is a cross-sectional view illustrating a storing member of the magnetic refrigeration module according to the first embodiment, which is viewed from the axial direction of the annular storing portion.
FIG. 5 is a cross-sectional view illustrating the storing member of the magnetic refrigeration module according to the first embodiment, which is viewed from an outer peripheral side in a radial direction of the annular storing portion.
FIG. 6 is a cross-sectional view illustrating the storing member of the magnetic refrigeration module according to the first embodiment, which is viewed from an inner peripheral side in the radial direction of the annular storing portion.
FIG. 7 is a plan view illustrating a storing member of a magnetic refrigeration module according to a second embodiment, which is viewed from an axial direction of an annular storing portion.
FIG. 8 is an end view illustrating the storing member of the magnetic refrigeration module according to the second embodiment, which is viewed from an outer peripheral side in a radial direction of the annular storing portion.
FIG. 9 is an end view illustrating the storing member of the magnetic refrigeration module according to the second embodiment, which is viewed from a circumferential direction of the annular storing portion.
FIG. 10 is a cross-sectional view illustrating the storing member of the magnetic refrigeration module according to the second embodiment, which is viewed from the radial direction of the annular storing portion.
FIG. 11 is a view illustrating the storing member of the magnetic refrigeration module according to the second embodiment, in which four divisional modules are connected in series.
FIG. 12 is a plan view of an outer packing for a header for connecting the divisional modules illustrated in FIG. 11.
FIG. 13 is a plan view of an inner packing for the header for connecting the divisional modules illustrated in FIG. 11.
FIG. 14 is an external view of a header structure for connecting the divisional modules illustrated in FIG. 11.
FIG. 15 is an inner view of the header structure for connecting the divisional modules illustrated in FIG. 11.
FIG. 16 is a cross-sectional view of the header structure for connecting the divisional modules illustrated in FIG. 11, which is viewed from a circumferential direction of the annular storing portion.
FIG. 17 is a view illustrating the storing member of the magnetic refrigeration module according to the second embodiment, in which two pairs of divisional modules connected in parallel are connected in series.
FIG. 18 is a plan view of an outer packing for a header for connecting the divisional modules illustrated in FIG. 17.
FIG. 19 is a plan view of an inner packing for the header for connecting the divisional modules illustrated in FIG. 17.
FIG. 20 is an external view of a header structure for connecting the divisional modules illustrated in FIG. 17.
FIG. 21 is an inner view of the header structure for connecting the divisional modules illustrated in FIG. 17.
FIG. 22 is a cross-sectional view of the header structure for connecting the divisional modules illustrated in FIG. 17, which is viewed from a circumferential direction of the annular storing portion.
FIG. 23 is a view illustrating a first example of a cross-sectional configuration of a storing member of the magnetic refrigeration module according to the first embodiment, which is viewed from the outer peripheral side in the radial direction of the annular storing portion.
FIG. 24 is a view illustrating the first example of the cross-sectional configuration of the storing member of the magnetic refrigeration module according to the first embodiment, which is viewed from the inner peripheral side in the radial direction of the annular storing portion.
FIG. 25 is a view illustrating a second example of a cross-sectional configuration of a storing member of the magnetic refrigeration module according to the first embodiment, which is viewed from the outer peripheral side in the radial direction of the annular storing portion.
FIG. 26 is a view illustrating the second example of the cross-sectional configuration of the storing member of the magnetic refrigeration module according to the first embodiment, which is viewed from the inner peripheral side in the radial direction of the annular storing portion.
FIG. 27 is a view illustrating a third example of a cross-sectional configuration of a storing member of the magnetic refrigeration module according to the first embodiment, which is viewed from the outer peripheral side in the radial direction of the annular storing portion.
FIG. 28 is a view illustrating the third example of the cross-sectional configuration of the storing member of the magnetic refrigeration module according to the first embodiment, which is viewed from the inner peripheral side in the radial direction of the annular storing portion.

### DESCRIPTION OF EMBODIMENTS

### «First Embodiment»

A first embodiment will be described herein. A magnetic refrigeration module (20) according to the present embodiment is configured to regulate a temperature of a heating medium by utilizing a magnetocaloric effect, and is provided in a magnetic refrigeration system (10) configured as, for example, a chiller for cooling only. The magnetic refrigeration module (20) is a cooling module with a solid-state refrigerant, which is configured to regulate the temperature of the heating medium by utilizing caloric effects, and the magnetic refrigeration system (10) is a cooling system with a solid-state refrigerant, which is configured to regulate the temperature of the heating medium by utilizing the caloric effects. It should be noted that the applications of the magnetic refrigeration module (20) are not limited to this. For example, the magnetic refrigeration module (20) may be provided for an air conditioner.

### -Configuration of Magnetic Refrigeration System-

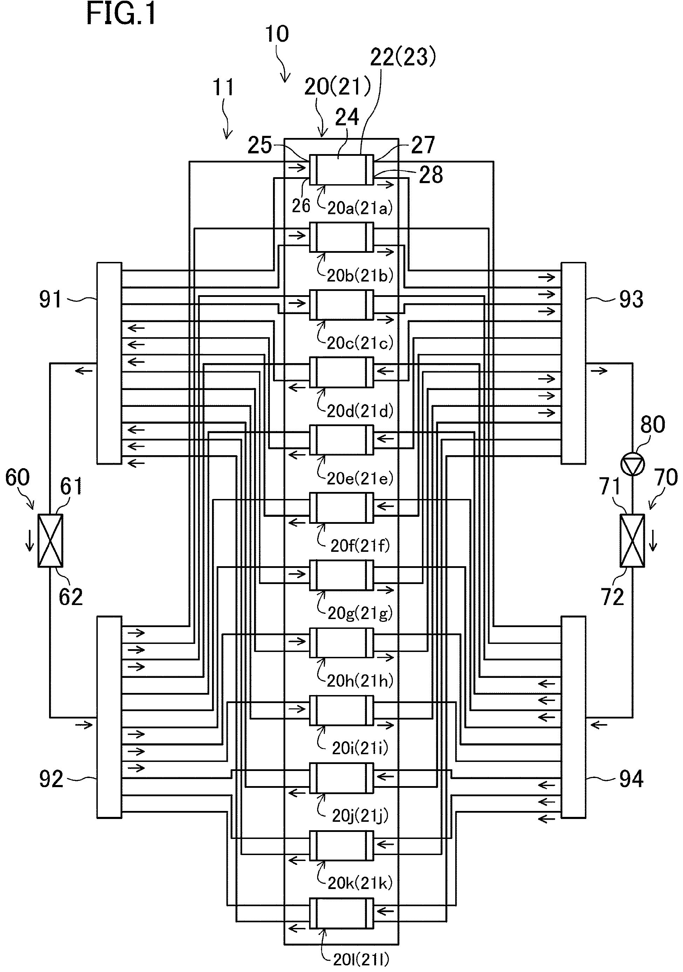

As illustrated in FIG. 1, the magnetic refrigeration system (10) includes a heating medium circuit (11) including the magnetic refrigeration module (20), a low-temperature-side heat exchanger (60), a high-temperature-side heat exchanger (70), and a heating medium pump (80). The components of the heating medium circuit (11) are connected with one another through heating medium pipes.

The magnetic refrigeration module (20) includes an annular storing portion (21) including a housing portion (22), which houses therein a magnetic working substance (24) serving as a solid-state refrigerant substance and forms flow paths (23) through which the heating medium flows, and the magnetic refrigeration module (20) is configured to apply a magnetic field as a force field onto the magnetic working substance (24) or remove such a magnetic field from the magnetic working substance (24), thereby generating a magnetocaloric effect to heat or cool the heating medium flowing through the flow paths (23).

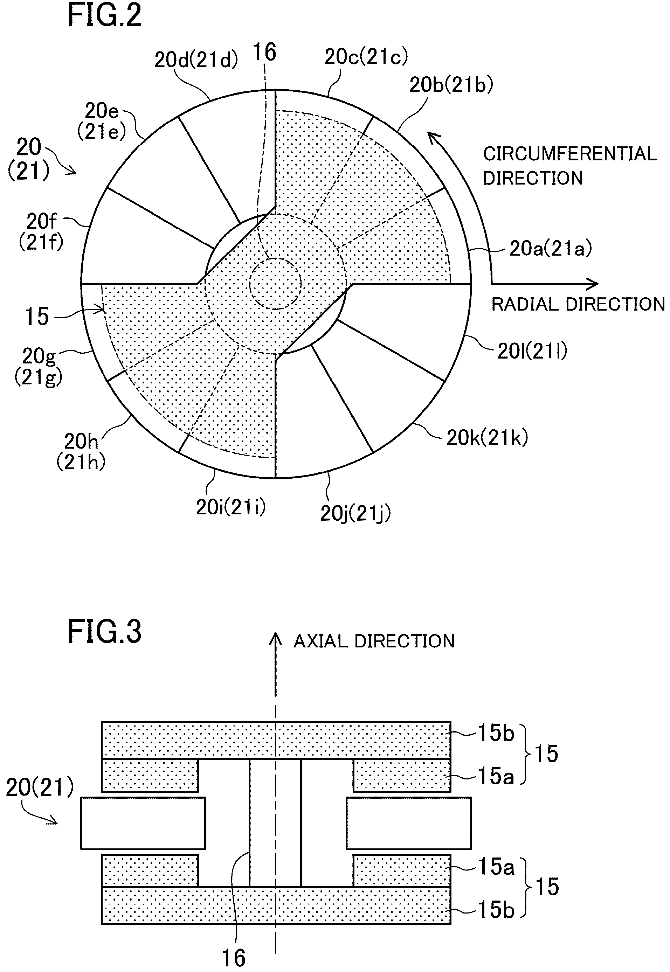

As illustrated in FIGS. 2 and 3, the annular storing portion (21) of the magnetic refrigeration module (20) includes a dozen of storing members (21a to 211), for example. That is, the magnetic refrigeration module (20) includes a plurality of unit modules (20a to 20l). In the present embodiment, the storing members (21a to 211) each have an annular sectoral shape as a non-limiting example, but may have another shape, such as a sectoral or trapezoid shape. The storing members (21a to 211) have such a thickness that facilitates prevention of magnetic flux leakage and ensures a required volume of the storing portion. In the following description, when a storing member (21a) is mentioned, it shall be interpreted such that the wording of the storing member (21a) refers to any storing member among the plurality of storing members (21a to 211), and similarly, when a unit module (20a) is mentioned, it shall be interpreted such that the wording of the unit module (20a) refers to any unit module among the plurality of unit modules (20a to 20l).

A Magnetic field application mechanism (15), which is a force field application mechanism, is provided to sandwich the magnetic refrigeration module (20) therebetween in the axial direction of the annular storing portion (21). The magnetic field application mechanism (15) includes a magnet (15a) and a yoke (15b), the magnet (15a) serving as an annular force field generator and being positioned in the vicinity of the magnetic refrigeration module (20), and the yoke (15b) supporting the annular magnet (15a) and being for formation of a magnetic circuit. A rotating mechanism (16) is provided to extend through a central opening of the magnetic refrigeration module (20) in an axial direction of the annular storing portion (21). The magnetic field application mechanism (15) is rotatable in the circumferential direction of the annular storing portion (21) by the rotating mechanism (16). The magnet (15a) is provided to overlap in such a way that, for example, the magnet (15a) covers an area equivalent to six of the storing members (21a), so that the magnetic field application mechanism (15) magnetically excites different ones of the unit modules (20a) every moment according to the rotation. In this way, the magnetic refrigeration module (20) of a rotating magnet type is configured. In the illustration in FIGS. 1 and 2, the unit modules (20a, 20b, 20c, 20g, 20h, 20i) are magnetically excited while the unit modules (20d, 20e, 20f, 20j, 20k, 20l) are not magnetically excited.

As illustrated in FIG. 1, each of the unit modules (20a to 20l) constituting the magnetic refrigeration module (20) has a low-temperature-side inflow path (25), a low-temperature-side outflow path (26), a high-temperature-side inflow path (27), and a high-temperature-side outflow path (28). The inflow paths (25, 27) and the outflow paths (26, 28) are in fluid communication with an internal space (flow paths (23)) in the housing portion (22) of each of the unit modules (20a to 20l). The heating medium flowing in via the low-temperature-side inflow path (25) flows through the flow paths (23) in the housing portion (22) and flows out via the high-temperature-side outflow path (28). The heating medium flowing in via the high-temperature-side inflow path (27) flows through the flow paths (23) in the housing portion (22) and flows out via the low-temperature-side outflow path (26). The configuration of the magnetic refrigeration module (20) (unit module (20a)) will be described in detail later.

The low-temperature-side heat exchanger (60) is configured to perform heat exchange between the heating medium cooled by the magnetic refrigeration module (20) and a secondary refrigerant flowing through a utilization-side unit not illustrated (for example, an air handling unit). The low-temperature-side heat exchanger (60) includes a first inflow port (61) connected with the low-temperature-side outflow path (26) of the magnetic refrigeration module (20) and a first outflow port (62) connected with the low-temperature-side inflow path (25) of the magnetic refrigeration module (20).

A heating medium pipe between the low-temperature-side outflow path (26) of each of the unit modules (20a to 20l) and the first inflow port (61) is provided with a first flow path switching valve (91), which is a multidirectional switching valve. A heating medium pipe between the low-temperature-side inflow path (25) of each of the unit modules (20a to 20l) and the first outflow port (62) is provided with a second flow path switching valve (92), which is a multidirectional switching valve.

The high-temperature-side heat exchanger (70) is configured to perform heat exchange between the heating medium heated by the magnetic refrigeration module (20) and the secondary refrigerant flowing through a heat-source-side unit not illustrated (for example, a cooling tower). The high-temperature-side heat exchanger (70) includes a second inflow port (71) connected with the high-temperature-side outflow path (28) of the magnetic refrigeration module (20) and a second outflow port (72) connected with the high-temperature-side inflow path (27) of the magnetic refrigeration module (20).

A heating medium pipe between the high-temperature-side outflow path (28) of each of the unit modules (20a to 20l) and the second inflow port (71) is provided with a third flow path switching valve (93), which is a multidirectional switching valve. A heating medium pipe between the high-temperature-side inflow path (27) of each of the unit modules (20a to 20l) and the second outflow port (72) is provided with a fourth flow path switching valve (94), which is a multidirectional switching valve.

The heating medium pump (80) is configured to circulate the heating medium between the magnetic refrigeration module (20) and the heat exchangers (60, 70). The heating medium pump (80) is provided, for example, to the heating medium pipe between the third flow path switching valve (93) and the high-temperature-side heat exchanger (70).

### -Configuration of Magnetic Refrigeration Module (Unit Module)-

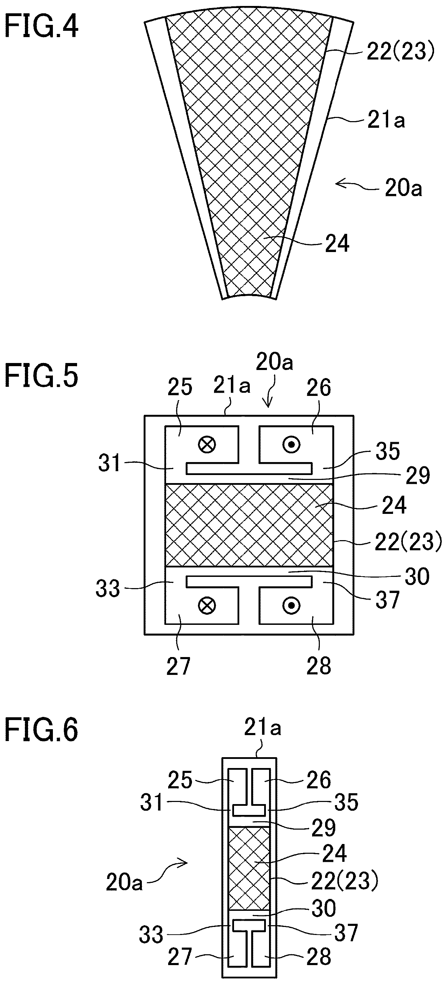

As illustrated in FIGS. 4 to 6, the unit module (20a) constituting the magnetic refrigeration module (20) includes the housing portion (22), the low-temperature-side inflow path (25), the high-temperature-side inflow path (27), the low-temperature-side outflow path (26), the high-temperature-side outflow path (28), and the storing member (21a) for accommodating them therein.

The housing portion (22) has an annular sectoral shape, as in the storing member (21a). The housing portion (22) houses the magnetic working substance (24) therein. The housing portion (22) forms therein flow paths (23) through which the heating medium flows. One ends of the flow paths (23) correspond to one side of the housing portion (22) that is the upper side in the illustration in FIGS. 5 and 6, and the other ends of the flow paths (23) correspond to the other side of the housing portion (22) that is the lower side in the illustration in FIGS. 5 and 6. Therefore, the heating medium flows in the flow paths (23) generally in the vertical direction in the illustration of FIGS. 5 and 6. This direction substantially coincides with the direction of a magnetic field application on the magnetic refrigeration module (20) (see FIG. 3).

The low-temperature-side inflow path (25) is a flow path having a shape like a cornered tube and extending in a radial direction of the annular storing portion (21) (storing member (21a)). The low-temperature-side inflow path (25) has an inflow port opened on the outer peripheral side of the storing member (21a) as illustrated in FIGS. 4 and 5, and is sealed on the inner peripheral side of the storing member (21a) as illustrated in FIGS. 4 and 6. The low-temperature-side inflow path (25) is connected with a first outflow port (62) of the low-temperature-side heat exchanger (60) via the heating medium pipe. The low-temperature-side inflow path (25) receives the heating medium flowing from the low-temperature-side heat exchanger (60) and allows the heating medium to flow into one ends of the flow paths (23) in the housing portion (22). The heating medium flows through the low-temperature-side inflow path (25) in a direction from the front side to the back side in FIG. 5.

The high-temperature-side inflow path (27) is a flow path having a shape like a cornered tube and extending in a radial direction of the annular storing portion (21) (storing member (21a)). The high-temperature-side inflow path (27) has an inflow port opened on the outer peripheral side of the storing member (21a) as illustrated in FIGS. 4 and 5, and is sealed on the inner peripheral side of the storing member (21a) as illustrated in FIGS. 4 and 6. The high-temperature-side inflow path (27) is connected with a second outflow port (72) of the high-temperature-side heat exchanger (70) via the heating medium pipe. The high-temperature-side inflow path (27) receives the heating medium flowing from the high-temperature-side heat exchanger (70) and allows the heating medium to flow into the other ends of the flow paths (23) in the housing portion (22). The heating medium flows through the high-temperature-side inflow path (27) in a direction from the front side to the back side in FIG. 5.

The low-temperature-side outflow path (26) is a flow path having a shape like a cornered tube and extending in a radial direction of the annular storing portion (21) (storing member (21a)). The low-temperature-side outflow path (26) has an outflow port opened on the outer peripheral side of the storing member (21a) as illustrated in FIGS. 4 and 5, and is sealed on the inner peripheral side of the storing member (21a) as illustrated in FIGS. 4 and 6. The low-temperature-side outflow path (26) is connected with a first inflow port (61) of the low-temperature-side heat exchanger (60) via the heating medium pipe. The low-temperature-side outflow path (26) receives the heating medium flowed out from the one ends of the flow paths (23) in the housing portion (22). The heating medium flows through the low-temperature-side outflow path (26) in a direction from the back side to the front side in FIG. 5.

The high-temperature-side outflow path (28) is a flow path having a shape like a cornered tube and extending in a radial direction of the annular storing portion (21) (storing member (21a)). The high-temperature-side outflow path (28) has an outflow port opened on the outer peripheral side of the storing member (21a) as illustrated in FIGS. 4 and 5, and is sealed on the inner peripheral side of the storing member (21a) as illustrated in FIGS. 4 and 6. The high-temperature-side outflow path (28) is connected with a second inflow port (71) of the high-temperature-side heat exchanger (70) via the heating medium pipe. The high-temperature-side outflow path (28) receives the heating medium flowed out from the other ends of the flow paths (23) in the housing portion (22). The heating medium flows through the high-temperature-side outflow path (28) in a direction from the back side to the front side in FIG. 5.

The unit module (20a) is such that heat insulating members provide insulation between the low-temperature-side inflow path (25) and the low-temperature-side outflow path (26), and between the high-temperature-side inflow path (27) and the high-temperature-side outflow path (28).

As described above, the magnetic refrigeration module (20) (unit module (20a)) according to the present embodiment is such that the flow direction of the heating medium flowing into the low-temperature-side inflow path (25) and the flow direction of the heating medium flowing out from the low-temperature-side outflow path (26) are in opposite ways with respect to each other. Moreover, the flow direction of the heating medium flowing into the high-temperature-side inflow path (27) and the flow direction of the heating medium flowing out from the high-temperature-side outflow path (28) are in opposite ways with respect to each other. Moreover, the flow direction of the heating medium flowing into the low-temperature-side inflow path (25) and the flow direction of the heating medium flowing into the high-temperature-side inflow path (27) are in the same way with respect to each other. Moreover, the flow direction of the heating medium flowing out from the low-temperature-side outflow path (26) and the flow direction of the heating medium flowing out from the high-temperature-side outflow path (28) are in the same way with respect to each other.

Furthermore, the magnetic refrigeration module (20) (unit module (20a)) according to the present embodiment is such that the inflow port of the low-temperature-side inflow path (25), the inflow port of the high-temperature-side inflow path (27), the outflow port of the low-temperature-side outflow path (26), and the outflow port of the high-temperature-side outflow path (28) are provided on the outer peripheral side of the annular storing portion (21) (storing member (21a)). Moreover, the low-temperature-side inflow path (25), the high-temperature-side inflow path (27), the low-temperature-side outflow path (26), and the high-temperature-side outflow path (28) are sealed on the inner peripheral side of the annular storing portion (21) (storing member (21a)).

As illustrated in FIGS. 5 and 6, in an area located between the one ends of the flow paths (23) of the housing portion (22) and the low-temperature-side inflow path (25) and between the one ends and the low-temperature-side outflow path (26), a first space (29) is provided. The first space (29) is a space having a shape like a flat cornered tube and extending in the radial direction of the annular storing portion (21) (storing member (21a)). The first space (29) is in fluid communication with the whole one ends of the flow paths (23) in the housing portion (22). The first space (29) may have a dimension or dimensions (for example, width or height) that change(s) along the radial direction. For example, the first space (29) may be dimensioned relatively larger toward the outer peripheral side of the annular storing portion (21) (storing member (21a)), and relatively smaller toward the inner peripheral side of the annular storing portion (21) (storing member (21a)).

Between the low-temperature-side inflow path (25) and the first space (29), a first slit (31) is provided to provide fluid communication therebetween. The first slit (31) is a long and narrow gap extending in the radial direction of the annular storing portion (21) (storing member (21a)). The first slit (31) widens the flow of the heating medium heading from the low-temperature-side inflow path (25) to the first space (29). That is, the presence of the first slit (31) causes the heating medium flowing in the low-temperature-side inflow path (25) to flow into substantially the entirety of the first space (29) in the radial direction of the annular storing portion (21) (storing member (21a)). The first slit (31) constitutes a first intermediate flow path. The first slit (31) may have a dimension or dimensions (for example, width or height) that change(s) along the radial direction. For example, the first slit (31) may be dimensioned relatively larger in width (the dimension in the lateral direction in the illustration in FIGS. 5 and 6) toward the outer peripheral side of the annular storing portion (21) (storing member (21a)), and relatively smaller in width toward the inner peripheral side of the annular storing portion (21) (storing member (21a)).

Between the low-temperature-side outflow path (26) and the first space (29), a third slit (35) is provided to provide fluid communication therebetween. The third slit (35) is a long and narrow gap extending in the radial direction of the annular storing portion (21) (storing member (21a)). The third slit (35) facilitates smooth flowing of the heating medium from the first space (29) to the low-temperature-side outflow path (26). The third slit (35) constitutes a third intermediate flow path. The third slit (35) may have a dimension or dimensions (for example, width or height) that change(s) along the radial direction. For example, the third slit (35) may be dimensioned relatively larger in width (the dimension in the lateral direction in the illustration in FIGS. 5 and 6) toward the outer peripheral side of the annular storing portion (21) (storing member (21a)), and relatively smaller in width toward the inner peripheral side of the annular storing portion (21) (storing member (21a)).

The first slit (31) and the third slit (35) are positioned in the vicinity of either ends of the housing portion (22) in the direction perpendicular to the general flow directions of the heating medium in the flow paths (23) in the housing portion (22) (that is, the lateral direction in FIGS. 5 and 6). More specifically, the first slit (31) provides fluid communication between a bottom of the low-temperature-side inflow path (25) provided on the left side in an upper portion of the unit module (20a), and a left-end portion of the first space (29). Moreover, the third slit (35) provides fluid communication between a bottom of the low-temperature-side outflow path (26) provided on the right side in the upper portion of the unit module (20a), and a right-end portion of the first space (29).

In an area located between the other ends of the flow paths (23) in the housing portion (22) and the high-temperature-side inflow path (27) and between the other ends and the high-temperature-side outflow path (28), a second space (30) is provided. The second space (30) is a space having a shape like a flat cornered tube and extending in the radial direction of the annular storing portion (21) (storing member (21a)). The second space (30) is in fluid communication with the whole other ends of the flow paths (23) in the housing portion (22). The second space (30) may have a dimension or dimensions (for example, width or height) that change(s) along the radial direction. For example, the second space (30) may be dimensioned relatively larger toward the outer peripheral side of the annular storing portion (21) (storing member (21a)), and relatively smaller toward the inner peripheral side of the annular storing portion (21) (storing member (21a)).

Between the high-temperature-side inflow path (27) and the second space (30), a second slit (33) is provided to provide fluid communication therebetween. The second slit (33) is a long and narrow gap extending in the radial direction of the annular storing portion (21) (storing member (21a)). The second slit (33) widens the flow of the heating medium heading from the high-temperature-side inflow path (27) to the second space (30). That is, the presence of the second slit (33) causes the heating medium flowing in the high-temperature-side inflow path (27) to flow into substantially the entirety of the second space (30) in the radial direction of the annular storing portion (21) (storing member (21a)). The second slit (33) constitutes a second intermediate flow path. The second slit (33) may have a dimension or dimensions (for example, width or height) that change(s) along the radial direction. For example, the second slit (33) may be dimensioned relatively larger in width (the dimension in the lateral direction in the illustration in FIGS. 5 and 6) toward the outer peripheral side of the annular storing portion (21) (storing member (21a)), and relatively smaller in width toward the inner peripheral side of the annular storing portion (21) (storing member (21a)).

Between the high-temperature-side outflow path (28) and the second space (30), a fourth slit (37) is provided to provide fluid communication therebetween. The fourth slit (37) is a long and narrow gap extending in the radial direction of the annular storing portion (21) (storing member (21a)). The fourth slit (37) facilitates smooth flowing of the heating medium from the second space (30) to the high-temperature-side outflow path (28). The fourth slit (37) constitutes a fourth intermediate flow path. The fourth slit (37) may have a dimension or dimensions (for example, width or height) that change(s) along the radial direction. For example, the fourth slit (37) may be dimensioned relatively larger in width (the dimension in the lateral direction in the illustration in FIGS. 5 and 6) toward the outer peripheral side of the annular storing portion (21) (storing member (21a)), and relatively smaller in width toward the inner peripheral side of the annular storing portion (21) (storing member (21a)).

The second slit (33) and the fourth slit (37) are positioned in the vicinity of either ends of the housing portion (22) in the direction perpendicular to the general flow directions of the heating medium in the flow paths (23) in the housing portion (22) (that is, the lateral direction in FIGS. 5 and 6). More specifically, the second slit (33) provides fluid communication between a ceiling of the high-temperature-side inflow path (27) provided on the left side in a lower portion of the unit module (20a), and a left-end portion of the second space (30). Moreover, the fourth slit (37) provides fluid communication between a ceiling of the high-temperature-side outflow path (28) provided on the right side in a lower portion of the unit module (20a), and a right-end portion of the second space (30).

The unit module (20a) is so configured that the first space (29) and the second space (30) are positioned to sandwich the housing portion (22) therebetween in the direction of the magnetic field application on the housing portion (22) (which is the vertical direction in the illustration in FIGS. 5 and 6). That is, the first space (29) is positioned above the housing portion (22) and the second space (30) is positioned below the housing portion (22).

The storing member (21a) is a member constituting an outer portion of the unit module (20a). The storing member (21a) stores therein the housing portion (22), the low-temperature-side and high-temperature-side inflow paths (25, 27), the low-temperature-side and high-temperature-side outflow paths (26, 28), the first and second spaces (29, 30), and the first to fourth slits (31, 33, 35, 37).

The storing member (21a) is configured such that a portion surrounding the low-temperature-side inflow and outflow paths (25, 26) (which is the upper portion in the illustration in FIGS. 5 and 6), and a portion surrounding the high-temperature-side inflow and outflow paths (27, 28) (which is the lower portion in the illustration in FIGS. 5 and 6) are made from a magnetic material(s) (such as an electrical steel sheet). A portion of the storing member (21a) between these portions is made from a nonmagnetic material. The nonmagnetic material is lower in thermal conductivity than the magnetic material(s) constituting the portion surrounding the low-temperature-side inflow and outflow paths (25, 26) and the portion surrounding the high-temperature-side inflow and outflow paths (27, 28). This portion made from the nonmagnetic material serves as a short circuit deterrent for the magnetic field and also prevents heat leakage from the high-temperature side to the low-temperature side.

### - Heating Medium Flow in the Magnetic Refrigeration System -

The magnetic refrigeration system (10) as illustrated in FIG. 1 is so configured that the cold thermal energy is supplied by controlling the flow path switching valves (91, 92, 93, 94) and performing the application and removal of the magnetic field on/from the housing portions (22) of the magnetic refrigeration module (20) (unit modules (20a to 20l)) in accordance with the control operation.

In the following, more specific explanation will be provided referring to an example in which the unit modules (20a, 20b, 20c, 20g, 20h, 20i) are magnetically excited and the unit modules (20d, 20e, 20f, 20j, 20k, 20l) are not magnetically excited as illustrated in FIGS. 1 and 2. The flow of the heating medium is indicated by the arrows in FIG. 1.

The heating medium flowing out from the first outflow port (62) of the low-temperature-side heat exchanger (60) flows selectively into the low-temperature-side inflow paths (25) of the excited unit modules (20a, 20b, 20c, 20g, 20h, 20i) as regulated by the second flow path switching valve (92). In the unit modules (20a, 20b, 20c, 20g, 20h, 20i), the heating medium flows into the flow paths (23) in the housing portion (22) via the first slit (31) and the first space (29), is heated in the flow paths (23) by heat exchange with the magnetic working substance (24) being in a heat generating state, flows through the second space (30) and the fourth slit (37), and flows out via the high-temperature-side outflow path (28).

The heating medium having flowed out from the high-temperature-side outflow path (28) of the unit modules (20a, 20b, 20c, 20g, 20h, 20i) flows into the second inflow port (71) of the high-temperature-side heat exchanger (70) via the heating medium pump (80) as regulated by the third flow path switching valve (93). The heating medium performs heat exchange with a secondary refrigerant flowing through a heat-source-unit (not illustrated) such as a cooling tower, and flows out from the second outflow port (72) of the high-temperature-side heat exchanger (70).

The heating medium having flowed out from the second outflow port (72) of the high-temperature-side heat exchanger (70) flows selectively into the high-temperature-side inflow paths (27) of the not-excited unit modules (20d, 20e, 20f, 20j, 20k, 20l) as regulated by the fourth flow path switching valve (94). **In** the unit modules (20d, 20e, 20f, 20j, 20k, 20l), the heating medium flows into the flow paths (23) in the housing portion (22) via the second slit (33) and the second space (30), is cooled in the flow paths (23) by heat exchange with the magnetic working substance (24) being in a heat absorbing state, flows through the first space (29) and the third slit (35), and flows out via the low-temperature-side outflow path (26).

The heating medium having flowed out from the low-temperature-side outflow path (26) of the unit modules (20d, 20e, 20f, 20j, 20k, 20l) flows into the first inflow port (61) of the low-temperature-side heat exchanger (60) as regulated by the first flow path switching valve (91). The heating medium performs heat exchange with a secondary refrigerant flowing through a utilization-side unit (not illustrated) such as an air handling unit, and flows out via the first outflow port (61) of the low-temperature-side heat exchanger (60).

**In** the present embodiment, the flow regulation of the heating medium as described above is repeated while selectively changing which unit modules (20a) are magnetically excited or not by the magnetic field application mechanism (15).

### -Advantages of First Embodiment-

As described above, the magnetic refrigeration module (20) according to this embodiment is configured such that the heating medium flows from the low-temperature side to the high-temperature side, or from the high-temperature side to the low-temperature side. More specifically, in the unit modules (20a to 20l) constituting the magnetic refrigeration module (20), the heating medium flows through the low-temperature-side inflow path (25), the first slit (first intermediate flow path) (31), the first space (29), the housing portion (22) (the flow paths (23)), and the high-temperature-side outflow path (28) in this order, or through the high-temperature-side inflow path (27), the second slit (second intermediate flow path) (33), the second space (30), the housing portion (22) (flow paths (23)), and the low-temperature-side outflow path (26) in this order.

Here, the flow of the heating medium that is to flow from the low-temperature-side inflow path (25) into the first space (29) via the first intermediate flow path (31) is widened through the first intermediate flow path (31), so that the heating medium flows over a wide range in the first space (29). Therefore, the heating medium can flow widely and evenly into the flow paths (23) in the housing portion (22) even via the first space (29), even though the first space (29) is configured to be relatively small because the first space (29) can be a dead volume. This facilitates the improvement in the performance of the magnetic refrigeration module (20).

Moreover, the flow of the heating medium flowing from the high-temperature-side inflow path (27) to the second space (30) via the second intermediate flow path (33) is widened through the second intermediate flow path (33), so that the heating medium flows over a wide range in the second space (30). Therefore, the heating medium can flow widely and evenly in the flow paths (23) in the housing portion (22) via the second space (30), even though the second space (30) is configured to be relatively small because the second space (30) can be a dead volume. This facilitates the improvement in the performance of the magnetic refrigeration module (20).

Furthermore, because the housing portion (22) and the like are provided in the annular storing portion (21) (storing member (21a)), wasted spaces can be reduced even if the configuration is applied to the rotating magnet type. This facilitates the improvement in the performance of the magnetic refrigeration module (20).

Moreover, the magnetic refrigeration module (20) according to the present embodiment is configured such that the magnetic circuit is located inside the module in order to reduce magnetic resistance, and the low-temperature-side inflow and outflow paths (25, 26) and the high-temperature-side inflow and outflow paths (27, 28) are located on the magnetic circuit. By configuring such that the low-temperature-side inflow and outflow paths (25, 26) and the high-temperature-side inflow and outflow paths (27, 28) are located above and below the housing portion (22) (that is, the magnetic working substance (24)), an occupancy rate of the magnetic working substance (24) with respect to the magnetic field is increased. Moreover, because the low-temperature-side inflow and outflow paths (25, 26) and the high-temperature-side inflow and outflow paths (27, 28) are provided in each unit module (20a) but the low-temperature-side inflow and outflow paths (25, 26) are separated from each other by the heat insulating members provided therebetween and the high-temperature-side inflow and outflow paths (27, 28) are separated from each other by the heat insulating members provided therebetween, the heat leakage between the low-temperature-side inflow and outflow paths (25, 26) and the heat leakage between the high-temperature-side inflow and outflow paths (27, 28) can be prevented. Moreover, for each unit modules, the low-temperature-side inflow and outflow paths (25, 26) and the high-temperature-side inflow and outflow paths (27, 28) in a unit module (20a) are elongated in the radial direction of that unit module (20a), loss due to eddy currents can be prevented, which would occur otherwise as in the case of forming a magnetic circuit of an integrated type. Furthermore, the low-temperature-side inflow and outflow paths (25, 26) and the high-temperature-side inflow and outflow paths (27, 28) have such a shape or shapes that would hinder magnetic saturation, such as a cornered tube-like shape, and are so configured that a portion thereof facing the housing portion (22) (that is, the magnetic working substance (24)) and a portion thereof facing the magnetic field application mechanism (15) are relatively wider in order to reduce the magnetic resistance.

Moreover, the magnetic refrigeration module (20) according to the present embodiment is configured such that the annular storing portion (21) includes the plurality of storing members (21a to 211), and each of the plurality of storing members (21a to 211) includes the housing portion (22), the low-temperature-side inflow path (25), the high-temperature-side inflow path (27), the low-temperature-side outflow path (26), the high-temperature-side outflow path (28), the first space (29), the second space (30), the first intermediate flow path (31), and the second intermediate flow path (33). This makes construction of the annular storing portion (21) easier than in the case of integrally forming the annular storing portion (21). In this case, if the plurality of storing members (21a to 211) has an annular sectoral, sectoral, or trapezoidal shape, it is easier to construct the annular storing portion (21) from the plurality of storing members (21a to 211).

Moreover, in the magnetic refrigeration module (20) according to the present embodiment, the annular storing portion (21) is configured to receive the magnetic field application in the axial direction thereof and the first space (29) and the second space (30) are positioned to sandwich the flow paths (23) (housing portion (22)) therebetween in the direction of the magnetic field application on the annular storing portion (21). This causes the flow direction of the heating medium from the first space (29) to the second space (30) via the housing portion (22) and the flow direction of the heating medium in the opposite direction to be substantially parallel to the direction of the magnetic field application on the annular storing portion (21).

Moreover, the magnetic refrigeration module (20) according to the present embodiment is configured such that the flow direction of the heating medium flowing into the low-temperature-side inflow path (25) and the flow direction of the heating medium flowing out from the low-temperature-side outflow path (26) are in opposite ways with respect to each other; the flow direction of the heating medium flowing into the high-temperature-side inflow path (27) and the flow direction of the heating medium flowing out from the high-temperature-side outflow path (28) are in opposite ways with respect to each other; the flow direction of the heating medium flowing into the low-temperature-side inflow path (25) and the flow direction of the heating medium flowing into the high-temperature-side inflow path (27) are in the same way with respect to each other; and the flow direction of the heating medium flowing out from the low-temperature-side outflow path (26) and the flow direction of the heating medium flowing out from the high-temperature-side outflow path (28) are in the same way with respect to each other. This makes it possible to position all of the inflow port of the low-temperature-side inflow path (25), the outflow port of the low-temperature-side outflow path (26), the inflow port of the high-temperature-side inflow path (27), and the outflow port of the high-temperature-side outflow path (28) on the same side of the magnetic refrigeration module (20) (unit module (20a)).

Moreover, the magnetic refrigeration module (20) according to the present embodiment is configured such that all of the inflow port of the low-temperature-side inflow path (25), the inflow port of the high-temperature-side inflow path (27), the outflow port of the low-temperature-side outflow path (26), and the outflow port of the high-temperature-side outflow path (28) are provided on the outer peripheral side of the annular storing portion (21) (storing member (21a)). This makes it easier to provide the inflow port of the low-temperature-side inflow path (25), the outflow port of the low-temperature-side outflow path (26), the inflow port of the high-temperature-side inflow path (27), and the outflow port of the high-temperature-side outflow path (28), compared with a configuration in which these ports are provided on the inner peripheral side of the annular storing portion (21) (storing member (21a)).

Moreover, the magnetic refrigeration module (20) according to the present embodiment is configured such that the low-temperature-side inflow path (25), the high-temperature-side inflow path (27), the low-temperature-side outflow path (26), and the high-temperature-side outflow path (28) are all sealed at the ends on the inner peripheral side of the annular storing portion (21). This makes it possible to position all of the inflow port of the low-temperature-side inflow path (25), the inflow port of the high-temperature-side inflow path (27), the outflow port of the low-temperature-side outflow path (26), and the outflow port of the high-temperature-side outflow path (28) on the outer peripheral side of the annular storing portion (21).

Furthermore, the magnetic refrigeration module (20) according to the present embodiment is configured such that the third slit (third intermediate flow path) (35) provides fluid communication between the first space (29) and the low-temperature-side outflow path (26) and the fourth slit (fourth intermediate flow path) (37) provides fluid communication between the second space (30) and the high-temperature-side outflow path (28). This makes it possible to reduce the dead volume in the first space (29) and the second space (30) by the effect of the third intermediate flow path (35) and the fourth intermediate flow path (37) as reduced by the first intermediate flow path (31) and the second intermediate flow path (33).

Moreover, the magnetic refrigeration system (10) according to the present embodiment includes the magnetic refrigeration module (20), the magnetic field application mechanism (15), the low-temperature-side heat exchanger (60), and the high-temperature-side heat exchanger (70), and the flow path switching valves (91, 92, 93, 94) provided respectively between the low-temperature-side outflow path (26) of each of the unit modules (20a to 20l) and the low-temperature-side heat exchanger (60), between the low-temperature-side inflow path (25) of each of the unit modules (20a to 20l) and the low-temperature-side heat exchanger (60), between the high-temperature-side outflow path (28) of each of the unit modules (20a to 20l) and the high-temperature-side heat exchanger (70), and between the high-temperature-side inflow path (27) of each of the unit modules (20a to 20l) and the high-temperature-side heat exchanger (70). This makes it possible to provide such a magnetic refrigeration system (10) that exhibits a high magnetic refrigerating capacity even when the magnetic refrigeration system (10) is applied to the rotating magnet type.

### «Second Embodiment»

A second embodiment will be described below. A magnetic refrigeration module (20) according to the present embodiment is different from the first embodiment in that a plurality of divisional modules (100) is accommodated in the storing member (21a), and that a header (40) for connecting the plurality of divisional modules (100) with each other in parallel and/or in series is further provided. In the following, the differences between the present embodiment and the first embodiment will be described mainly.

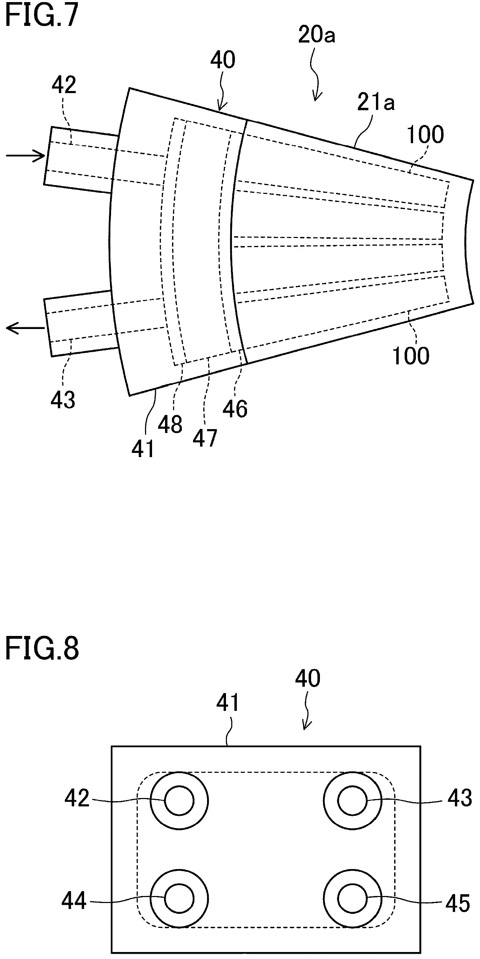

As illustrated in FIGS. 7 to 9, the unit module (20a) constituting the magnetic refrigeration module (20) according to the present embodiment includes the plurality of (for example, four) divisional modules (100), and the header (40) for connecting the plurality of divisional modules (100) with each other in parallel or in series is provided on the outer peripheral side of the unit module (20a). The header (40) includes an inner packing (46) in contact with an outer peripheral surface of the unit module (20a), a header structure (47) in contact with an outer peripheral side of the inner packing (46) and forming parallel-way flow paths and/or series-way flow paths, and an outer packing (48) in contact with an outer peripheral side of the header structure (47). The inner packing (46), the header structure (47), and the outer packing (48) are accommodated in a header case (41).

On an outer peripheral side of the header case (41), ends of a low-temperature-side inflow pipe (42), a low-temperature-side outflow pipe (43), a high-temperature-side inflow pipe (44), and a high-temperature-side outflow pipe (45) are projected from the outer packing (48) toward the outer circumference. In the present embodiment, instead of the low-temperature-side inflow path (25), the low-temperature-side outflow path (26), the high-temperature-side inflow path (27), and the high-temperature-side outflow path (28) of the first embodiment, the low-temperature-side inflow pipe (42), the low-temperature-side outflow pipe (43), the high-temperature-side inflow pipe (44), and the high-temperature-side outflow pipe (45) are connected with the low-temperature-side heat exchanger (60) and the high-temperature-side heat exchanger (70) of the magnetic refrigeration system (10) illustrated in FIG. 1.

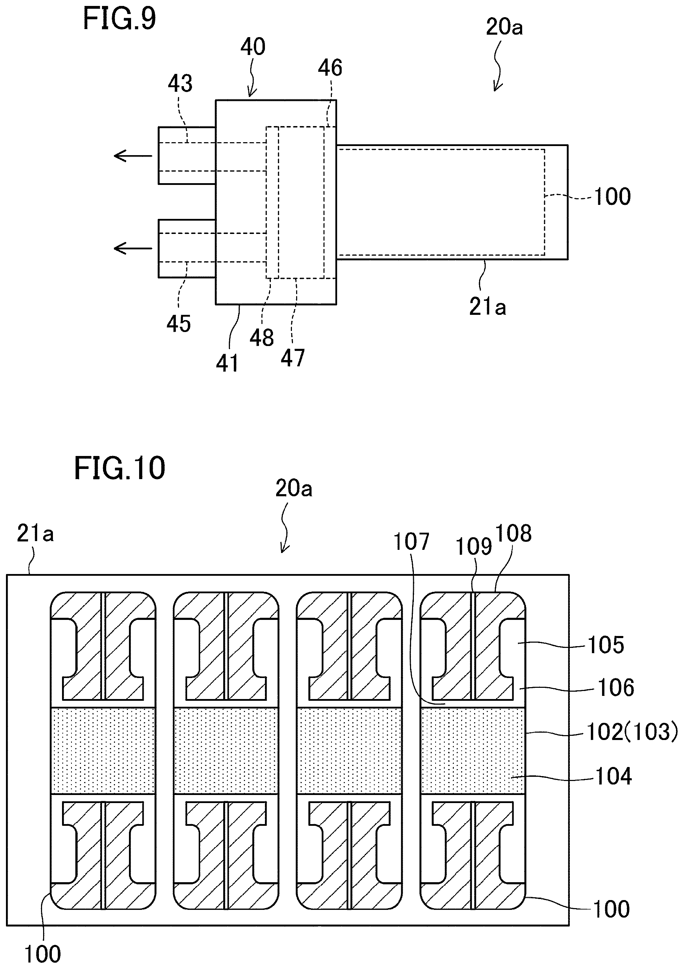

Moreover, as illustrated in FIG. 10, the divisional modules (100) constituting the unit module (20a) according to the present embodiment have a configuration basically similar to that of the unit module (20a) of the first embodiment illustrated in FIGS. 4 to 6. That is, each of the divisional modules (100) includes a housing portion (102) similar to the housing portion (22) of the first embodiment. The housing portion (102) houses a magnetic working substance (104) and forms therein flow paths (103) through which a heating medium flows. Moreover, each of the divisional modules (100) includes two pairs of inflow/outflow paths (105), two pairs of intermediate flow paths (106), and distribution spaces (107) respectively above and below the housing portion (102), the pairs of inflow/outflow paths (105) corresponding to any ones of the low-temperature-side inflow path (25), the low-temperature-side outflow path (26), the high-temperature-side inflow path (27), and the high-temperature-side outflow path (28) of the first embodiment, the pairs of intermediate flow paths (106) corresponding to any ones of the first slit (the first intermediate flow path) (31), the second slit (the second intermediate flow path) (33), the third slit (the third intermediate flow path) (35), and the fourth slit (the fourth intermediate flow path) (37) of the first embodiment, and the distribution spaces (107) corresponding to any ones of the first space (29) and the second space (30) of the first embodiment. The inflow/outflow paths (105) in pair are separated from each other by a magnetic material (108) and a heat insulating member (109).

The present embodiment is so modifiable that the connection configuration of the plurality of divisional modules (100) can be modified by changing the configuration of the header (40).

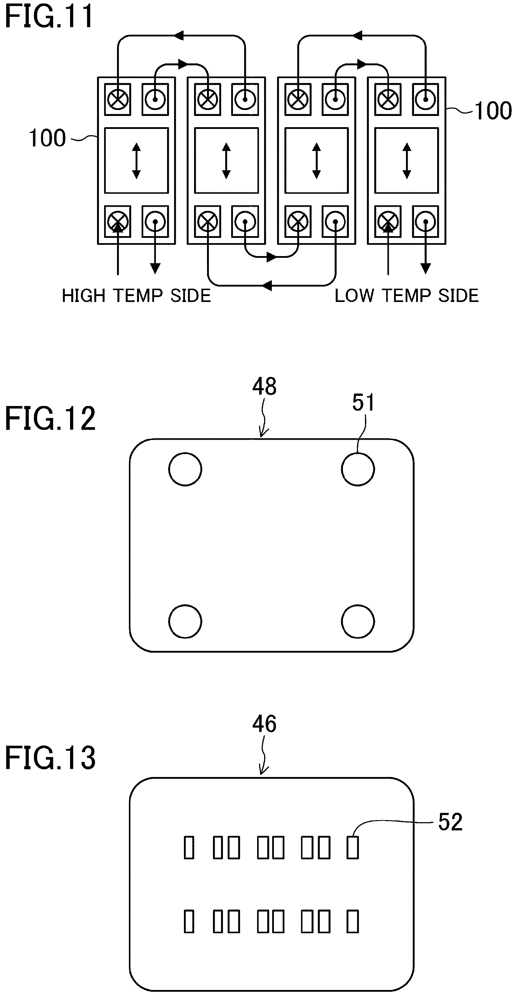

For example, in a case where four divisional modules (100) are connected in series as illustrated in FIG. 11, the heating medium flowing from the high-temperature side into the divisional modules (100) under the magnetic field application flows through the first one (high-temperature-side one) of the divisional modules (100) in such a way that the heating medium flows through the inflow/outflow path (105), the intermediate flow path (106), the distribution space (107), the housing portion (102) (the magnetic working substance (104)), the distribution space (107), the intermediate flow path (106), and the inflow/outflow path (105) in this order, and the heating medium flows out toward the front side of FIG. 11 because the inflow/outflow path (105) is sealed at an end thereof on the back side of FIG. 11. The heating medium thus flowed out flows into the inflow/outflow path (105) of the next one of the divisional modules (100) from the front side of FIG. 11, and flows therethrough in such a way that, as in the first one (high-temperature-side one) of the divisional modules (100), the heating medium flows through the inflow/outflow path (105), the intermediate flow path (106), the distribution space (107), the housing portion (102) (the magnetic working substance (104)), the distribution space (107), the intermediate flow path (106), and the inflow/outflow path (105) in this order, and the heating medium flows out toward the front side of FIG. 11 because the inflow/outflow path (105) is sealed at an end thereof on the back side of FIG. 11. Such a flow of the heating medium is repeated in the remaining ones of the divisional modules (100) and finally the heating medium flows out from the low-temperature-side one of the divisional modules (100) to the low-temperature side.

In the divisional modules (100) not under the magnetic field application, the heating medium flowing into the divisional modules (100) from the low-temperature side flows through a path similar to the one described above and flows out to the high-temperature side.

As illustrated in FIG. 12, the outer packing (48) of the header (40) for connecting the four divisional modules (100) illustrated in FIG. 11 has first openings (51) for connection with the low-temperature-side inflow pipe (42), the low-temperature-side outflow pipe (43), the high-temperature-side inflow pipe (44), and the high-temperature-side outflow pipe (45) illustrated in FIGS. 7 to 9.

As illustrated in FIG. 13, the inner packing (46) of the header (40) for connecting the four divisional modules (100) illustrated in FIG. 11 has second openings (52) for connection with openings of the inflow/outflow paths (105) of the divisional modules (100). The second openings (52) are configured in such a way that the connection configuration as illustrated in FIG. 11 can be achieved.

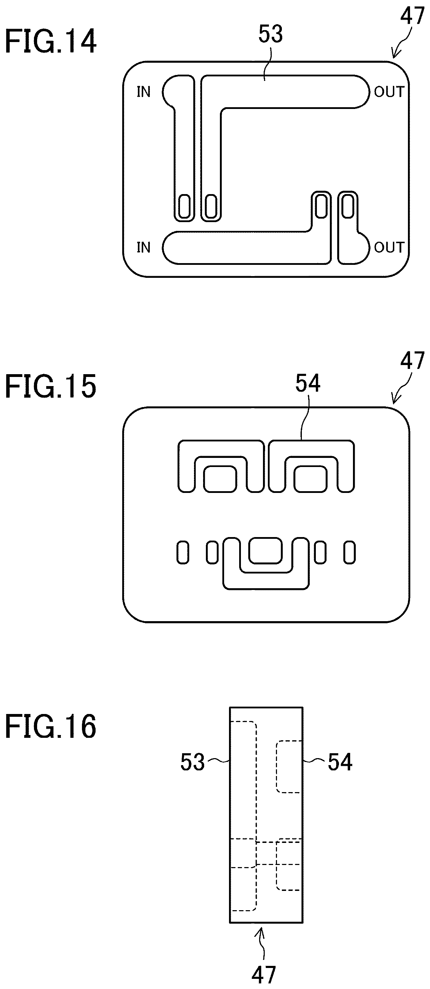

As illustrated in FIGS. 14 to 16, the header structure (47) of the header (40) for connecting the divisional modules (100) as illustrated in FIG. 11 has third openings (53) for connection with the first openings (51) on the side in contact with the outer packing (48), and fourth openings (54) for connection with the second openings (52) on the side in contact with the inner packing (46). The third openings (53) and the fourth openings (54) are configured in such a way that the connection configuration as illustrated in FIG. 11 can be achieved.

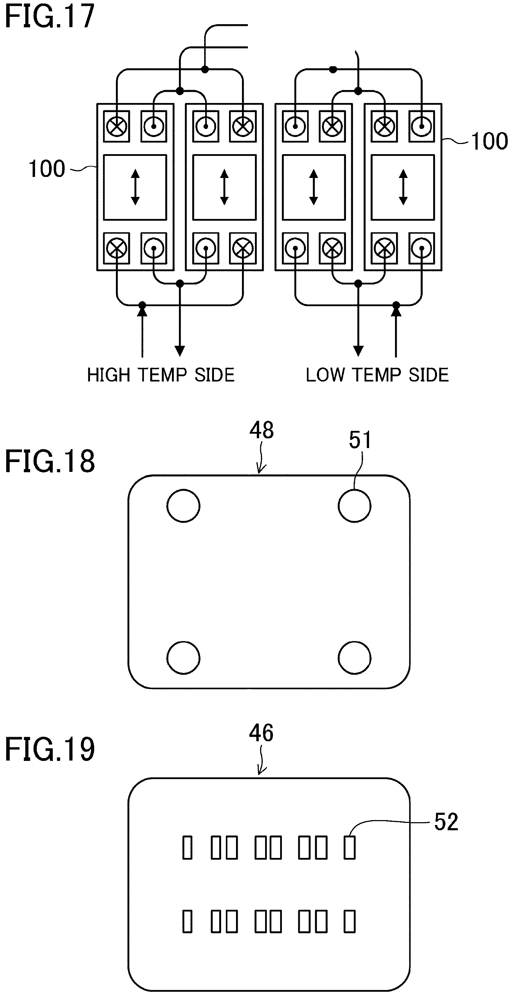

Moreover, for example, in a case where divisional modules (100) are connected in such a way that two pairs of divisional modules (100) connected in parallel are connected in series as illustrated in FIG. 17, the heating medium flowing from the high-temperature side into the divisional modules (100) under the magnetic field application is divided into two flows, and the two flows flow into two (high-temperature-side ones) of the divisional modules (100) in such a way that the heating medium flows through the inflow/outflow path (105), the intermediate flow path (106), the distribution space (107), the housing portion (102) (the magnetic working substance (104)), the distribution space (107), the intermediate flow path (106), and the inflow/outflow path (105) in this order, and the heating medium flows out toward the front side of FIG. 17 because the inflow/outflow path (105) is sealed at an end thereof on the back side of FIG. 17. The two flows of the heating medium having flowed out are merged together and redivided into two flows in order to let the two flows flow into the inflow/outflow paths (105) of the next two (the low-temperature-side ones) of the divisional modules (100) (which are on the front side of FIG. 17), and the two flows of the heating medium thus redivided flow into the next two of the divisional modules (100) in such a way that, as in the high-temperature-side divisional modules (100), the heating medium flows through the inflow/outflow path (105), the intermediate flow path (106), the distribution space (107), the housing portion (102) (the magnetic working substance (104)), the distribution space (107), the intermediate flow path (106), and the inflow/outflow path (105) in this order, and the heating medium flows out toward the front side of FIG. 17 because the inflow/outflow path (105) is sealed at an end thereof on the back side of FIG. 17, and merge together and flow out to the low-temperature side collectively.

In the divisional modules (100) not under the magnetic field application, the heating medium flowing into the divisional modules (100) from the low-temperature side flows through a path similar to the one described above and flows out to the high-temperature side.

As illustrated in FIG. 18, the outer packing (48) of the header (40) for connecting the four divisional modules (100) illustrated in FIG. 17 has the first openings (51) for connection with the low-temperature-side inflow pipe (42), the low-temperature-side outflow pipe (43), the high-temperature-side inflow pipe (44), and the high-temperature-side outflow pipe (45) illustrated in FIGS. 7 to 9.

As illustrated in FIG. 19, the inner packing (46) of the header (40) for connecting the four divisional modules (100) illustrated in FIG. 17 has the second openings (52) for connection with openings of the inflow/outflow paths (105) of the divisional modules (100). The second openings (52) are configured in such a way that the connection configuration as illustrated in FIG. 17 can be achieved.

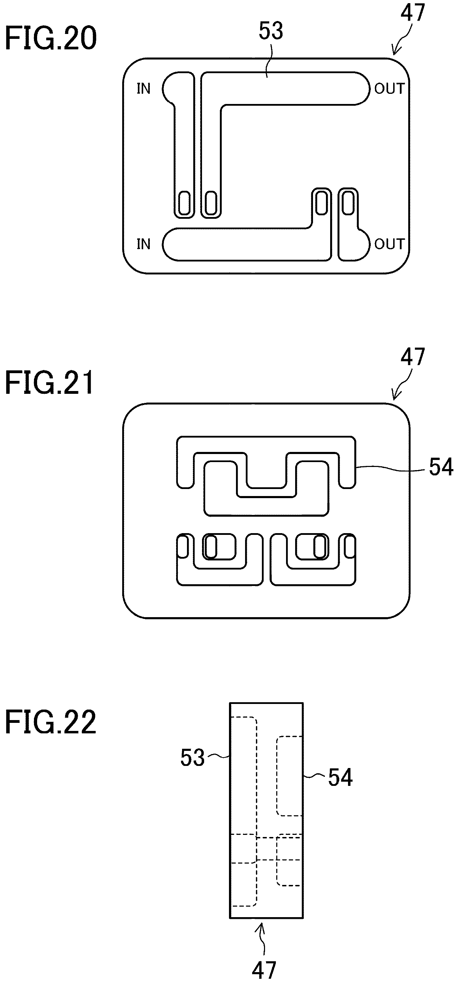

As illustrated in FIGS. 20 to 22, the header structure (47) of the header (40) for connecting the divisional modules (100) as illustrated in FIG. 17 has the third openings (53) for connection with the first openings (51) on the side in contact with the outer packing (48), and the fourth openings (54) for connection with the second openings (52) on the side in contact with the inner packing (46). The third openings (53) and the fourth openings (54) are configured in such a way that the connection configuration as illustrated in FIG. 11 can be achieved.

### -Advantages of Second Embodiment-

According to the present embodiment as described above, the following effects can be achieved in addition to the effects similar to those of the first embodiment. That is, the storing member (21a) accommodates therein the plurality of divisional modules (100) and further includes the header (40) for connecting the plurality of divisional modules (100) with each other in parallel and/or in series. This facilitates further reduction of the dead volume compared to the configuration without such division, and because the magnetic path in the storing member (21a) is divided into elongated sections by the divisional modules (100), this also facilitates reduction of the loss that would be caused due to eddy currents.

### <<Other Embodiments>>

Even though the magnetic refrigeration module (20) is applied to the rotating magnet type in each of the aforementioned embodiments, the magnetic refrigeration module (20) may be the one to rotate instead of the magnet as an alternative configuration.

Moreover, even though the magnetic field is applied onto the magnetic refrigeration module (20) in the axial direction of the annular storing portion (21) in each of the aforementioned embodiments, the magnetic field may be applied onto the magnetic refrigeration module (20) in another direction such as a radial direction of the annular storing portion (21) instead of the axial direction as an alternative configuration.

Moreover, each of the aforementioned embodiments is not particularly limited in terms of the direction of the flow of the heating medium in the magnetic refrigeration module (20), the positions and shapes of the slits (intermediate flow paths) (31, 33, 35, 37, 106) and the spaces (29, 30, 107), the direction of the magnetic field application on the housing portion (22, 102), and the configurations of the annular storing portion (21), etc. For example, tubular structures may be employed instead of the slits (31, 33, 35, 37, 106). Moreover, the low-temperature-side inflow path (25), the low-temperature-side outflow path (26), the high-temperature-side inflow path (27), the high-temperature-side outflow path (28), and the inflow/outflow paths (105) are not particularly limited in terms of their positions, shapes, and where they are opened and where they are sealed.

Moreover, the first embodiment is so configured that the widths (the dimension in the circumferential direction) of the spaces (29, 30) and the slits (31, 33, 35, 37) are relatively larger toward the outer peripheral side of the annular storing portion (21) (storing member (21a)) and relatively smaller toward the inner peripheral side of the annular storing portion (21) (storing member (21a)). However, the present disclosure is not limited to this, and may be so configured that at least either ones of the circumferential dimensions or the axial dimensions of the spaces (29, 30) and/or the slits (31, 33, 35, 37) are changed from the inner peripheral side toward the outer peripheral side of the annular storing portion (21).

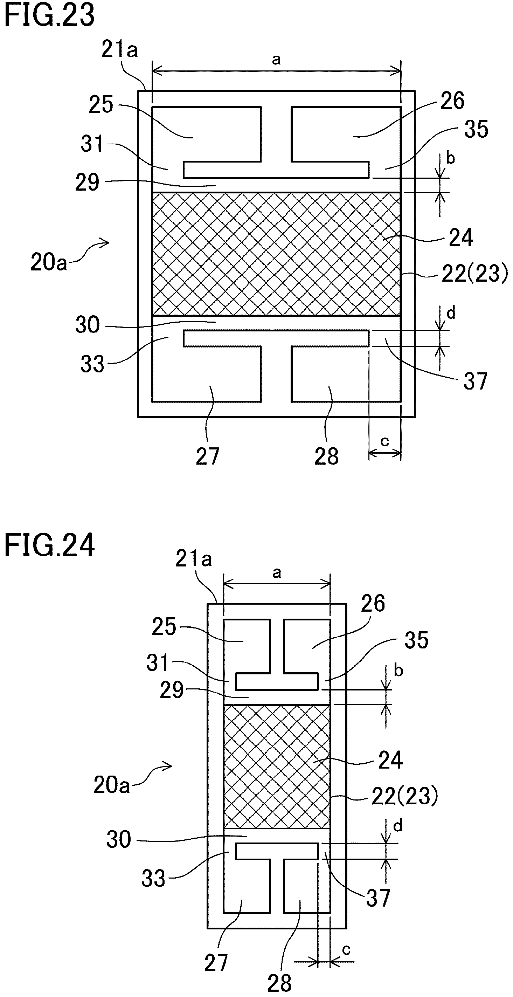

For example, as in a first example illustrated in FIGS. 23 and 24, the present disclosure may be such that the circumferential dimensions a of the spaces (29, 30) and the circumferential dimensions c of the slits (31, 33, 35, 37) become greater toward the outer periphery, while the axial (i.e., the magnetic field direction) dimensions b of the spaces (29, 30) and the axial dimensions d of the slits (31, 33, 35, 37) are constant. This ensures that a ratio of the volumes of the spaces (29, 30) to the volume of the housing portion (22) (magnetic working substance (24)) is constant in the radial direction and that the flow rate of the heating medium through the slits (intermediate flow paths) (31, 33, 35, 37) is substantially constant. This allows the flow rate of the heating medium passing through the magnetic working substance (24) to be substantially constant in the radial direction, thereby facilitating prevention of flow deflection.

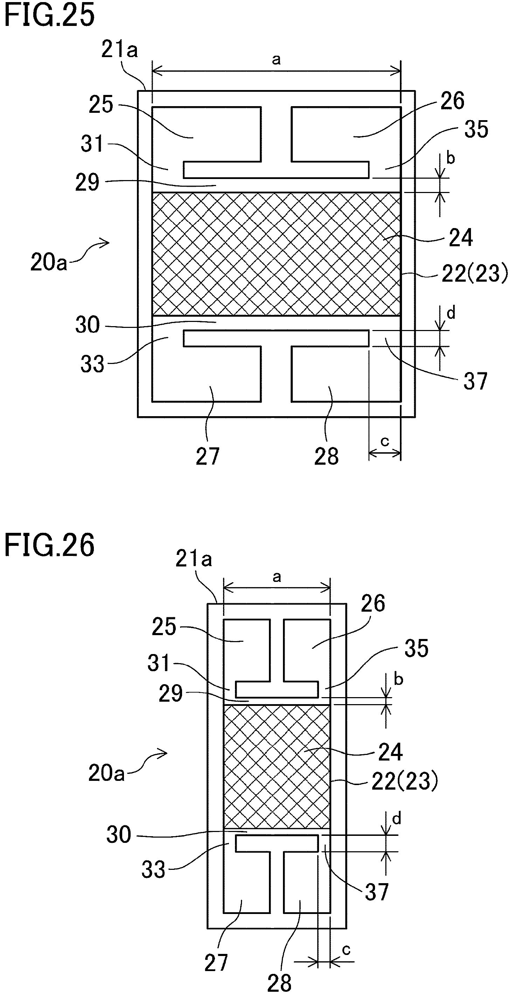

Moreover, for example, as in a second example illustrated in FIGS. 25 and 26, the present disclosure may be such that the circumferential dimensions a of the spaces (29, 30), the circumferential dimensions c of the slits (31, 33, 35, 37), and the axial dimensions b of the spaces (29, 30) become greater toward the outer periphery, while the axial dimensions d of the slits (31, 33, 35, 37) are constant. The flow rate of the heating medium passing through the magnetic working substance (24) would be possibly increased on the inner peripheral side because the flow rate of the heating medium passing through the spaces (29, 30) is smaller and thus pressure loss is smaller on the inner peripheral side than on the outer peripheral side. However, with the configuration in which the axial dimensions b of the spaces (29, 30) become greater toward the outer periphery, the velocity of the heating medium passing through the spaces (29, 30) becomes substantially constant in the radial direction, and the velocity of the heating medium passing through the magnetic working substance (24) becomes substantially constant in the radial direction, thereby facilitating the prevention of flow deflection.

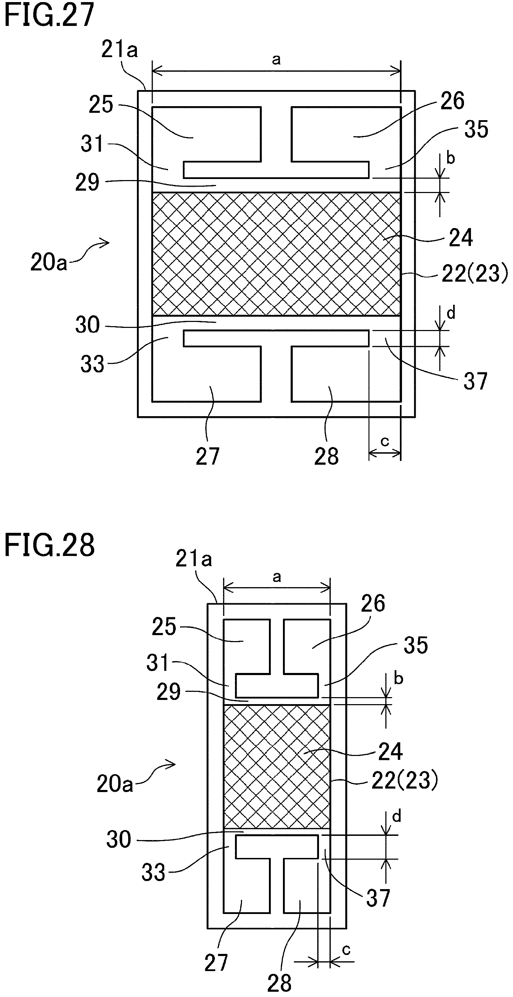

Moreover, for example, as in a third example illustrated in FIGS. 27 and 28, the present disclosure may be such that the circumferential dimensions a of the spaces (29,30), the circumferential dimensions c of the slits (31, 33, 35, 37), and the axial dimensions b of the spaces (29, 30) become greater toward the outer periphery, while the axial dimensions d of the slits (31, 33, 35, 37) are reduced toward the outer periphery. This results in an increase of pressure loss at the slits (intermediate flow paths) (31, 33, 35, 37) on the inner peripheral side, thereby making it possible to further suppress the increase of the flow rate of the heating medium passing through the magnetic working substance (24) on the inner peripheral side, compared with the second example, and therefore, this facilitates the prevention of the flow deflection.

It should be noted that actual dimensions are determined, further taking into consideration the dimensions and the pressure losses of the inflow/outflow paths, , etc., and therefore the actual dimensions may be different from the ones in the first to third examples. Moreover, the second embodiment may be modified such that, as in the first embodiment, at least either ones of the circumferential dimensions or the axial dimensions of the spaces (107) and/or the intermediate flow paths (106) are changed from the inner peripheral side of the annular storing portion (21) toward the outer peripheral side of the annular storing portion (21).

Even though the embodiments described above exemplify the magnetic refrigeration module and the magnetic refrigeration system, the cooling module and the cooling system with the solid-state refrigerant may be ones employing a technology other than the magnetic refrigeration in which the magnetocaloric effect is induced in the magnetic working substance (24). Note that, in the present disclosure, the solid-state refrigerant substance encompasses such substances that have an intermediate property between liquid and solid such as plastic crystals.

Examples of the cooling modules and cooling systems with solid-state refrigerant of the other technologies include 1) a technology in which an electric caloric effect is induced in a solid-state refrigerant substance, 2) a technology in which pressure caloric effect is induced in a solid-state refrigerant substance, and 3) a technology in which an elastocaloric effect is induced in a solid-state refrigerant substance.

In the cooling module and the cooling system with the solid-state refrigerant of the technology 1), a force field generator (hereinafter, which may be referred to as an inducing portion) is configured to apply an electric field change on the solid-state refrigerant substance. This causes a phase transition of the solid-state refrigerant substance from ferroelectric to paraelectric, or the like, thereby causing the solid-state refrigerant substance to generate heat or absorb heat.

In the cooling module and the cooling system with the solid-state refrigerant of the technology 2), an inducing portion is configured to apply a pressure change on the solid-state refrigerant substance, thereby causing a phase transition of the solid-state refrigerant substance, which generates heat or absorbs heat.

In the cooling module and the cooling system with the solid-state refrigerant of the technology 3), an inducing portion is configured to apply a stress change on the solid-state refrigerant substance, thereby causing a phase transition of the solid-state refrigerant substance, which generates heat or absorbs heat.

### INDUSTRIAL APPLICABILITY

As described above, the present disclosure is applicable to cooling modules with a solid-state refrigerant, especially, magnetic refrigeration modules, and to a cooling system with a solid-state refrigerant, especially a magnetic refrigeration system.

### DESCRIPTION OF REFERENCE CHARACTERS

- 10: Magnetic Refrigeration System (Cooling system with Solid-State Refrigerant)
- 15a: Magnet (Force Field Generator)
- 20: Magnetic Refrigeration Module (Cooling Module with Solid-State Refrigerant)
- 21: Annular Storing Portion
- 21a to 211: Storing Members
- 22: Housing Portion
- 23: Flow Path
- 24: Magnetic Working Substance (Solid-State Refrigerant Substance)
- 25: Low-Temperature-Side Inflow Path
- 26: Low-Temperature-Side Outflow Path
- 27: High-Temperature-Side Inflow Path
- 28: High-Temperature-Side Outflow Path
- 29: First Space
- 30: Second Space
- 31: First Slit (First Intermediate Flow Path)
- 33: Second Slit (Second Intermediate Flow Path)
- 35: Third Slit (Third Intermediate Flow Path)
- 37: Fourth Slit (Fourth Intermediate Flow Path)
- 40: Header
- 60: Low-Temperature-Side Heat Exchanger
- 70: High-Temperature-Side Heat Exchanger
- 91, 92, 93, 94: Flow Path Switching Valves
- 100: Divisional Module

## Claims

1. A cooling module for a solid-state refrigerant cooling, the cooling module comprising:
an annular storing portion (21) including a housing portion (22) for housing therein a solid-state refrigerant substance (24) and forming therein flow paths (23) through which a heating medium flows;
a low-temperature-side inflow path (25) through which the heating medium flows into one ends of the flow paths (23);
a high-temperature-side inflow path (27) through which the heating medium flows into the other ends of the flow paths (23);
a low-temperature-side outflow path (26) through which the heating medium flowing out of the one ends of the flow paths (23) flows; and
a high-temperature-side outflow path (28) through which the heating medium flowing out of the other ends of the flow paths (23) flows;
**characterized in that** the cooling module further comprises
a first space (29) between the one ends of the flow paths (23) and the low-temperature-side inflow path (25);
a second space (30) between the other ends of the flow paths (23) and the high-temperature-side inflow path (27);
a first intermediate flow path (31) being in fluid communication with the low-temperature-side inflow path (25) and the first space (29) and being for widening a flow of the heating medium flowing from the low-temperature-side inflow path (25) to the first space (29); and
a second intermediate flow path (33) being in fluid communication with the high-temperature-side inflow path (27) and the second space (30) and being for widening a flow of the heating medium flowing from the high-temperature-side inflow path (27) to the second space (30).

2. The cooling module of claim 1, wherein
the annular storing portion (21) includes a plurality of storing members (21a to 211), and
the plurality of storing members (21a to 211) each includes the housing portion (22), the low-temperature-side inflow path (25), the high-temperature-side inflow path (27), the low-temperature-side outflow path (26), the high-temperature-side outflow path (28), the first space (29), the second space (30), the first intermediate flow path (31), and the second intermediate flow path (33).

3. The cooling module of claim 2, wherein
the plurality of storing members (21a to 21l) has an annular sectoral, sectoral, or trapezoidal shape.

4. The cooling module of claim 2 or 3, wherein
the plurality of storing members (21a to 211) each accommodates therein a plurality of divisional modules (100), and
the plurality of storing members (21a to 211) each further includes a header (40) for connecting the plurality of divisional modules (100) with each other in parallel and/or in series.

5. The cooling module of any one of claims 1 to 4, wherein
at least either ones of circumferential dimensions or axial dimensions of the first space (29) and the second space (30) are changed from an inner peripheral side toward an outer peripheral side of the annular storing portion (21).

6. The cooling module of any one of claims 1 to 5, wherein
at least either ones of circumferential dimensions or axial dimensions of the first intermediate flow path (31) and the second intermediate flow path (33) are changed from an inner peripheral side toward an outer peripheral side of the annular storing portion (21).

7. The cooling module of claim 6, wherein
the first intermediate flow path (31) and the second intermediate flow path (33) are slits (31, 33), the slits (31, 33) extending along the flow paths (23), and
at least either ones of circumferential dimensions or axial dimensions of the slits (31, 33) are changed from an inner peripheral side toward an outer peripheral side of the annular storing portion (21).

8. The cooling module of any one of claims 1 to 7, wherein
the annular storing portion (21) is configured to receive application of a force field such as a magnetic field in an axial direction of the annular storing portion (21), and
the first space (29) and the second space (30) are positioned to sandwich the flow paths (23) therebetween in the direction of the application of the force field such as the magnetic field applied on the annular storing portion (21).

9. The cooling module of any one of claims 1 to 8, wherein
a flow direction of the heating medium flowing into the low-temperature-side inflow path (25) and a flow direction of the heating medium flowing out from the low-temperature-side outflow path (26) are in opposite ways to each other,
a flow direction of the heating medium flowing into the high-temperature-side inflow path (27) and a flow direction of the heating medium flowing out from the high-temperature-side outflow path (28) are in opposite ways to each other,
the flow direction of the heating medium flowing into the low-temperature-side inflow path (25) and the flow direction of the heating medium flowing into the high-temperature-side inflow path (27) are in the same way to each other, and
the flow direction of the heating medium flowing out from the low-temperature-side outflow path (26) and the flow direction of the heating medium flowing out from the high-temperature-side outflow path (28) are in the same way to each other.

10. The cooling module of any one of claims 1 to 9, wherein
all of an inflow port of the low-temperature-side inflow path (25), an inflow port of the high-temperature-side inflow path (27), an outflow port of the low-temperature-side outflow path (26), and an outflow port of the high-temperature-side outflow path (28) are provided on the outer peripheral side of the annular storing portion (21).

11. The cooling module of any one of claims 1 to 10, wherein
the low-temperature-side inflow path (25), the high-temperature-side inflow path (27), the low-temperature-side outflow path (26), and the high-temperature-side outflow path (28) are sealed on the inner peripheral side of the annular storing portion (21).

12. The cooling module of any one of claims 1 to 11, further comprising:
a third intermediate flow path (35) providing fluid communication between the first space (29) and the low-temperature-side outflow path (26); and
a fourth intermediate flow path (37) providing fluid communication between the second space (30) and the high-temperature-side outflow path (28).

13. The cooling module of any one of claims 1 to 12, wherein
the solid-state refrigerant substance (24) is a magnetic working substance (24).

14. A cooling system for a solid-state refrigerant cooling, the cooling system comprising:
the cooling module (20) of any one of claims 1 to 12 for the solid-state refrigerant cooling;
a force field generator (15a), such as a magnet, for applying a force field such as a magnetic field onto the annular storing portion (21) in an axial direction of the annular storing portion (28);
a low-temperature-side heat exchanger (60) provided between the low-temperature-side outflow path (26) and the low-temperature-side inflow path (25);
a high-temperature-side heat exchanger (70) provided between the high-temperature-side outflow path (28) and the high-temperature-side inflow path (27);
a plurality of the low-temperature-side inflow paths (25), a plurality of the high-temperature-side inflow paths (27), a plurality of the low-temperature-side outflow paths (26), and a plurality of the high-temperature-side outflow path (28); and
flow path switching valves (91, 92, 93, 94), provided respectively between the plurality of the low-temperature-side outflow paths (26) and the low-temperature-side heat exchanger (60), between the plurality of the low-temperature-side inflow paths (25) and the low temperature-side heat exchanger (60), between the plurality of the high-temperature-side outflow paths (28) and the high-temperature-side heat exchanger (70), and between the plurality of the high-temperature-side inflow path (27) and the high-temperature-side heat exchanger (70).

15. The cooling system of claim 14, wherein
the solid-state refrigerant substance (24) is a magnetic working substance (24).

## Patentansprüche

1. Kühlmodul für eine Festkörper-Kältemittelkühlung, wobei das Kühlmodul Folgendes umfasst:
einen ringförmigen Speicherabschnitt (21), der einen Gehäuseabschnitt (22) einschließt, um darin eine Festkörper-Kältemittelsubstanz (24) aufzunehmen und darin Strömungspfade (23) auszubilden, durch die ein Heizmedium strömt;
einen niedertemperaturseitigen Einströmungspfad (25), durch den das Heizmedium in ein Ende der Strömungspfade (23) strömt;
einen hochtemperaturseitigen Einströmungspfad (27), durch den das Heizmedium in die anderen Enden der Strömungspfade (23) strömt;
einen niedertemperaturseitigen Ausströmungspfad (26), durch den das aus den einen Enden der Strömungspfade (23) ausströmende Heizmedium strömt; und
einen hochtemperaturseitigen Ausströmungspfad (28), durch den das aus den anderen Enden der Strömungspfade (23) ausströmende Heizmedium strömt;
**dadurch gekennzeichnet, dass** das Kühlmodul weiter Folgendes umfasst
einen ersten Raum (29) zwischen den einen Enden der Strömungspfade (23) und dem niedertemperaturseitigen Einströmungspfad (25);
einen zweiten Raum (30) zwischen den anderen Enden der Strömungspfade (23) und dem hochtemperaturseitigen Einströmungspfad (27);
einen ersten Zwischenströmungspfad (31), der in Fluidkommunikation mit dem niedertemperaturseitigen Einströmungspfad (25) und dem ersten Raum (29) ist und dazu dient, eine Strömung des Heizmediums, das von dem niedertemperaturseitigen Einströmungspfad (25) zu dem ersten Raum (29) strömt, zu verbreitern; und
einen zweiten Zwischenströmungspfad (33), der in Fluidkommunikation mit dem hochtemperaturseitigen Einströmungspfad (27) und dem zweiten Raum (30) ist und dazu dient, eine Strömung des Heizmediums, das von dem hochtemperaturseitigen Einströmungspfad (27) zu dem zweiten Raum (30) strömt, zu verbreitern.

2. Kühlmodul nach Anspruch 1, wobei
der ringförmige Speicherabschnitt (21) eine Vielzahl von Speicherelementen (21a bis 211) einschließt, und
die Vielzahl von Speicherelementen (21a bis 211) jeweils den Gehäuseabschnitt (22), den niedertemperaturseitigen Einströmungspfad (25), den hochtemperaturseitigen Einströmungspfad (27), den niedertemperaturseitigen Ausströmungspfad (26), den hochtemperaturseitigen Ausströmungspfad (28), den ersten Raum (29), den zweiten Raum (30), den ersten Zwischenströmungspfad (31) und den zweiten Zwischenströmungspfad (33) einschließt.

3. Kühlmodul nach Anspruch 2, wobei
die Vielzahl von Speicherelementen (21a bis 211) eine ringförmige sektorale, sektorale oder trapezförmige Gestalt aufweist.

4. Kühlmodul nach Anspruch 2 oder 3, wobei
die Vielzahl von Speicherelementen (21a bis 211) jeweils eine Vielzahl von Teilungsmodulen (100) darin aufnehmen, und
die Vielzahl von Speicherelementen (21a bis 21l) jeweils weiter einen Verteiler (40) einschließt, um die Vielzahl von Teilungsmodulen (100) miteinander parallel und/oder in Reihe zu verbinden.

5. Kühlmodul nach einem der Ansprüche 1 bis 4, wobei
mindestens eine der Umfangsabmessungen oder axialen Abmessungen des ersten Raums (29) und des zweiten Raums (30) von einer inneren Umfangsseite in Richtung einer äußeren Umfangsseite des ringförmigen Speicherabschnitts (21) geändert wird.

6. Kühlmodul nach einem der Ansprüche 1 bis 5, wobei
mindestens eine der Umfangsabmessungen oder axialen Abmessungen des ersten Zwischenströmungspfads (31) und des zweiten Zwischenströmungspfads (33) von einer inneren Umfangsseite in Richtung einer äußeren Umfangsseite des ringförmigen Speicherabschnitts (21) geändert wird.

7. Kühlmodul nach Anspruch 6, wobei
der erste Zwischenströmungspfad (31) und der zweite Zwischenströmungspfad (33) Schlitze (31, 33) sind, wobei sich die Schlitze (31, 33) entlang der Strömungspfade (23) erstrecken, und
mindestens eine der Umfangsabmessungen oder axialen Abmessungen der Schlitze (31, 33) von einer inneren Umfangsseite in Richtung einer äußeren Umfangsseite des ringförmigen Speicherabschnitts (21) geändert wird.

8. Kühlmodul nach einem der Ansprüche 1 bis 7, wobei
der ringförmige Speicherabschnitt (21) konfiguriert ist, um die Anwendung eines Kraftfeldes, wie eines Magnetfeldes, in einer axialen Richtung des ringförmigen Speicherabschnitts (21) zu empfangen, und
der erste Raum (29) und der zweite Raum (30) positioniert sind, um die dazwischen liegenden Strömungspfade (23) in der Richtung der Anwendung des Kraftfeldes, wie des auf den ringförmigen Speicherabschnitt (21) angewandten Magnetfeldes, einzuschließen.

9. Kühlmodul nach einem der Ansprüche 1 bis 8, wobei
eine Strömungsrichtung des in den niedertemperaturseitigen Einströmungspfad (25) einströmenden Heizmediums und eine Strömungsrichtung des aus dem niedertemperaturseitigen Ausströmungspfad (26) ausströmenden Heizmediums entgegengesetzt zueinander verlaufen,
eine Strömungsrichtung des in den hochtemperaturseitigen Einströmungspfad (27) einströmenden Heizmediums und eine Strömungsrichtung des aus dem hochtemperaturseitigen Ausströmungspfad (28) ausströmenden Heizmediums entgegengesetzt zueinander verlaufen,
die Strömungsrichtung des in den niedertemperaturseitigen Einströmungspfad (25) einströmenden Heizmediums und die Strömungsrichtung des in den hochtemperaturseitigen Einströmungspfad (27) einströmenden Heizmediums gleichsinnig zueinander verlaufen, und
die Strömungsrichtung des aus dem niedertemperaturseitigen Ausströmungspfad (26) ausströmenden Heizmediums und die Strömungsrichtung des aus dem hochtemperaturseitigen Ausströmungspfad (28) ausströmenden Heizmediums gleichsinnig zueinander verlaufen.

10. Kühlmodul nach einem der Ansprüche 1 bis 9, wobei
alle aus einem Einströmungsanschluss des niedertemperaturseitigen Einströmungspfades (25), einem Einströmungsanschluss des hochtemperaturseitigen Einströmungspfades (27), einem Ausströmungsanschluss des niedertemperaturseitigen Ausströmungspfades (26) und einem Ausströmungsanschluss des hochtemperaturseitigen Ausströmungspfades (28) an der äußeren Umfangsseite des ringförmigen Speicherabschnitts (21) bereitgestellt sind.

11. Kühlmodul nach einem der Ansprüche 1 bis 10, wobei
der niedertemperaturseitige Einströmungspfad (25), der hochtemperaturseitige Einströmungspfad (27), der niedertemperaturseitige Ausströmungspfad (26) und der hochtemperaturseitige Ausströmungspfad (28) auf der inneren Umfangsseite des ringförmigen Speicherabschnitts (21) abgedichtet sind.

12. Kühlmodul nach einem der Ansprüche 1 bis 11, weiter umfassend:
einen dritten Zwischenströmungspfad (35), der eine Fluidkommunikation zwischen dem ersten Raum (29) und dem niedertemperaturseitigen Ausströmungspfad (26) bereitstellt; und
einen vierten Zwischenströmungspfad (37), der eine Fluidkommunikation zwischen dem zweiten Raum (30) und dem hochtemperaturseitigen Ausströmungspfad (28) bereitstellt.

13. Kühlmodul nach einem der Ansprüche 1 bis 12, wobei
die Festkörper-Kältemittelsubstanz (24) eine magnetisch arbeitende Substanz (24) ist.

14. Kühlsystem für eine Festkörper-Kältemittelkühlung, wobei das Kühlsystem Folgendes umfasst:
das Kühlmodul (20) nach einem der Ansprüche 1 bis 12 für die Festkörper-Kältemittelkühlung;
einen Kraftfeldgenerator (15a), wie einen Magneten, zum Anwenden eines Kraftfeldes, wie eines Magnetfeldes, auf den ringförmigen Speicherabschnitt (21) in einer axialen Richtung des ringförmigen Speicherabschnitts (28);
einen niedertemperaturseitigen Wärmetauscher (60), der zwischen dem niedertemperaturseitigen Ausströmungspfad (26) und dem niedertemperaturseitigen Einströmungspfad (25) bereitgestellt ist;
einen hochtemperaturseitigen Wärmetauscher (70), der zwischen dem hochtemperaturseitigen Ausströmungspfad (28) und dem hochtemperaturseitigen Einströmungspfad (27) bereitgestellt ist;
eine Vielzahl der niedertemperaturseitigen Einströmungspfade (25), eine Vielzahl der hochtemperaturseitigen Einströmungspfade (27), eine Vielzahl der niedertemperaturseitigen Ausströmungspfade (26) und eine Vielzahl der hochtemperaturseitigen Ausströmungspfade (28); und
Strömungspfad-Wechselventile (91, 92, 93, 94), die jeweils zwischen der Vielzahl von niedertemperaturseitigen Ausströmungspfaden (26) und dem niedertemperaturseitigen Wärmetauscher (60) bereitgestellt sind, zwischen der Vielzahl der niedertemperaturseitigen Einströmungspfade (25) und dem niedertemperaturseitigen Wärmetauscher (60), zwischen der Vielzahl der hochtemperaturseitigen Ausströmungspfade (28) und dem hochtemperaturseitigen Wärmetauscher (70), und zwischen der Vielzahl der hochtemperaturseitigen Einströmungspfade (27) und dem hochtemperaturseitigen Wärmetauscher (70).

15. Kühlsystem nach Anspruch 14, wobei
die Festkörper-Kältemittelsubstanz (24) eine magnetisch arbeitende Substanz (24) ist.

## Revendications

1. Module de refroidissement pour un refroidissement de fluide frigorigène solide, le module de refroidissement comprenant :
une partie de stockage annulaire (21) incluant une partie de logement (22) pour loger en son sein une substance de fluide frigorigène solide (24) et formant en son sein des canaux d'écoulement (23) à travers lesquels s'écoule un fluide caloporteur ;
un canal d'entrée côté basse température (25) à travers lequel s'écoule le fluide caloporteur dans des premières extrémités des canaux d'écoulement (23) ;
un canal d'entrée côté haute température (27) à travers lequel s'écoule le fluide caloporteur dans les autres extrémités des canaux d'écoulement (23) ;
un canal de sortie côté basse température (26) à travers lequel s'écoule le fluide caloporteur s'écoulant hors des premières extrémités des canaux d'écoulement (23) ; et
un canal de sortie côté haute température (28) à travers lequel s'écoule le fluide caloporteur s'écoulant hors des autres extrémités des canaux d'écoulement (23) ; **caractérisé en ce que** le module de refroidissement comprend en outre
un premier espace (29) entre les premières extrémités des canaux d'écoulement (23) et le canal d'entrée côté basse température (25) ;
un second espace (30) entre les autres extrémités des canaux d'écoulement (23) et le canal d'entrée côté haute température (27) ;
un premier canal d'écoulement intermédiaire (31) étant en communication fluidique avec le canal d'entrée côté basse température (25) et le premier espace (29) et étant destiné à élargir un écoulement du fluide caloporteur s'écoulant du canal d'entrée côté basse température (25) au premier espace (29) ; et
un deuxième canal d'écoulement intermédiaire (33) étant en communication fluidique avec le canal d'entrée côté haute température (27) et le second espace (30) et étant destiné à élargir un écoulement du fluide caloporteur s'écoulant du canal d'entrée côté haute température (27) au second espace (30).

2. Module de refroidissement selon la revendication 1, dans lequel
la partie de stockage annulaire (21) inclut une pluralité d'éléments de stockage (21a à 211), et
la pluralité d'éléments de stockage (21a à 21l) incluent chacun la partie de logement (22), le canal d'entrée côté basse température (25), le canal d'entrée côté haute température (27), le canal de sortie côté basse température (26), le canal de sortie côté haute température (28), le premier espace (29), le second espace (30), le premier canal d'écoulement intermédiaire (31) et le deuxième canal d'écoulement intermédiaire (33).

3. Module de refroidissement selon la revendication 2, dans lequel
la pluralité d'éléments de stockage (21a à 211) présentent une forme annulaire sectorielle, sectorielle ou trapézoïdale.

4. Module de refroidissement selon la revendication 2 ou 3, dans lequel
la pluralité d'éléments de stockage (21a à 211) logent chacun une pluralité de modules divisionnaires (100), et
la pluralité d'éléments de stockage (21a à 21l) incluent en outre chacun un collecteur (40) pour relier la pluralité de modules divisionnaires (100) les uns aux autres en parallèle et/ou en série.

5. Module de refroidissement selon l'une quelconque des revendications 1 à 4, dans lequel
au moins l'une ou l'autre parmi des dimensions circonférentielles ou des dimensions axiales du premier espace (29) et du second espace (30) sont modifiées d'un côté périphérique interne vers un côté périphérique externe de la partie de stockage annulaire (21).

6. Module de refroidissement selon l'une quelconque des revendications 1 à 5, dans lequel
au moins l'une ou l'autre parmi des dimensions circonférentielles ou des dimensions axiales du premier canal d'écoulement intermédiaire (31) et du deuxième canal d'écoulement intermédiaire (33) sont modifiées d'un côté périphérique interne vers un côté périphérique externe de la partie de stockage annulaire (21).

7. Module de refroidissement selon la revendication 6, dans lequel
le premier canal d'écoulement intermédiaire (31) et le deuxième canal d'écoulement intermédiaire (33) sont des fentes (31, 33), les fentes (31, 33) s'étendant le long des canaux d'écoulement (23), et
au moins l'une ou l'autre parmi des dimensions circonférentielles ou des dimensions axiales des fentes (31, 33) sont modifiées d'un côté périphérique interne vers un côté périphérique externe de la partie de stockage annulaire (21).

8. Module de refroidissement selon l'une quelconque des revendications 1 à 7, dans lequel
la partie de stockage annulaire (21) est configurée pour recevoir l'application d'un champ de force tel qu'un champ magnétique dans une direction axiale de la partie de stockage annulaire (21), et
le premier espace (29) et le second espace (30) sont positionnés pour prendre en sandwich les canaux d'écoulement (23) entre eux dans la direction de l'application du champ de force tel que le champ magnétique appliqué sur la partie de stockage annulaire (21).

9. Module de refroidissement selon l'une quelconque des revendications 1 à 8, dans lequel
une direction d'écoulement du fluide caloporteur s'écoulant dans le canal d'entrée côté basse température (25) et une direction d'écoulement du fluide caloporteur s'écoulant hors du canal de sortie côté basse température (26) sont opposées l'une à l'autre,
une direction d'écoulement du fluide caloporteur s'écoulant dans le canal d'entrée côté haute température (27) et une direction d'écoulement du fluide caloporteur s'écoulant hors du canal de sortie côté haute température (28) sont opposées l'une à l'autre,
la direction d'écoulement du fluide caloporteur s'écoulant dans le canal d'entrée côté basse température (25) et la direction d'écoulement du fluide caloporteur s'écoulant dans le canal d'entrée côté haute température (27) sont dans le même sens l'une par rapport à l'autre, et
la direction d'écoulement du fluide caloporteur s'écoulant hors du canal de sortie côté basse température (26) et la direction d'écoulement du fluide caloporteur s'écoulant hors du canal de sortie côté haute température (28) sont dans le même sens l'une par rapport à l'autre.

10. Module de refroidissement selon l'une quelconque des revendications 1 à 9, dans lequel
un orifice d'entrée du canal d'entrée côté basse température (25), un orifice d'entrée du canal d'entrée côté haute température (27), un orifice de sortie du canal de sortie côté basse température (26) et un orifice de sortie du canal de sortie côté haute température (28) sont tous disposés sur le côté périphérique externe de la partie de stockage annulaire (21).

11. Module de refroidissement selon l'une quelconque des revendications 1 à 10, dans lequel
le canal d'entrée côté basse température (25), le canal d'entrée côté haute température (27), le canal de sortie côté basse température (26) et le canal de sortie côté haute température (28) sont scellés sur le côté périphérique interne de la partie de stockage annulaire (21).

12. Module de refroidissement selon l'une quelconque des revendications 1 à 11, comprenant en outre :
un troisième canal d'écoulement intermédiaire (35) assurant une communication fluidique entre le premier espace (29) et le canal de sortie côté basse température (26) ; et
un quatrième canal d'écoulement intermédiaire (37) assurant une communication fluidique entre le second espace (30) et le canal de sortie côté haute température (28).

13. Module de refroidissement selon l'une quelconque des revendications 1 à 12, dans lequel
la substance de fluide frigorigène solide (24) est une substance de travail magnétique (24).

14. Système de refroidissement pour un refroidissement de fluide frigorigène solide, le système de refroidissement comprenant :
le module de refroidissement (20) selon l'une quelconque des revendications 1 à 12 pour le refroidissement de fluide frigorigène solide ;
un générateur de champ de force (15a), tel qu'un aimant, pour appliquer un champ de force tel qu'un champ magnétique sur la partie de stockage annulaire (21) dans une direction axiale de la partie de stockage annulaire (28) ;
un échangeur de chaleur côté basse température (60) disposé entre le canal de sortie côté basse température (26) et le canal d'entrée côté basse température (25) ;
un échangeur de chaleur côté haute température (70) disposé entre le canal de sortie côté haute température (28) et le canal d'entrée côté haute température (27) ;
une pluralité des canaux d'entrée côté basse température (25), une pluralité des canaux d'entrée côté haute température (27), une pluralité des canaux de sortie côté basse température (26), et une pluralité des canaux de sortie côté haute température (28) ; et
des soupapes de commutation de canal d'écoulement (91, 92, 93, 94), disposées respectivement entre la pluralité des canaux de sortie côté basse température (26) et l'échangeur de chaleur côté basse température (60), entre la pluralité des canaux d'entrée côté basse température (25) et l'échangeur de chaleur côté basse température (60), entre la pluralité des canaux de sortie côté haute température (28) et l'échangeur de chaleur côté haute température (70), et entre la pluralité des canaux d'entrée côté haute température (27) et l'échangeur de chaleur côté haute température (70).

15. Système de refroidissement selon la revendication 14, dans lequel
la substance de fluide frigorigène solide (24) est une substance de travail magnétique (24).
